(19) Europäisches Patentamt
European Patent Office
Office européen des brevets

(11) **EP 4 753 219 A1**

(12) **EUROPEAN PATENT APPLICATION**
published in accordance with Art. 153(4) EPC

(43) Date of publication:
**03.06.2026 Bulletin 2026/23**

(21) Application number: **24855221.8**

(22) Date of filing: **22.02.2024**

(51) International Patent Classification (IPC):
***H04L 27/26*** *(2006.01)*

(52) Cooperative Patent Classification (CPC):
**H04L 27/26**

(86) International application number:
**PCT/CN2024/078044**

(87) International publication number:
**WO 2025/039487 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.08.2023 CN 202311051673**

(71) Applicant: HUAWEI TECHNOLOGIES CO., LTD.
**Shenzhen 518129 (CN)**

(72) Inventors:
• HU, Mengshi
 **Shenzhen, Guangdong 518129 (CN)**
• YU, Jian
 **Shenzhen, Guangdong 518129 (CN)**
• GAN, Ming
 **Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND COMMUNICATION APPARATUS**

(57) This application relates to the communication field, and in particular, to a communication method and a communication apparatus. In the method, a first device generates a first PPDU. A quantity of subcarriers of a data part of the first PPDU in a first bandwidth is the same as a quantity of subcarriers of a data part of a second PPDU in a second bandwidth. A subcarrier spacing of the data part of the first PPDU in the first bandwidth is less than a subcarrier spacing of the data part of the second PPDU in the second bandwidth. The second PPDU is a PPDU defined in an existing standard, for example, a UHR PPDU, an HE PPDU, a VHT PPDU, and an EHT PPDU. The second bandwidth is greater than the first bandwidth. In this way, a subcarrier configuration of the data part of the first PPDU in the first bandwidth can be flexibly adjusted, so that requirements of different devices for the subcarrier spacing of the data part can be met.

```
First device                                    Second device
     |                                                |
 ┌───────────────────────────┐                       |
 │ S701: Generate a first    │                       |
 │ part of a first PPDU,     │                       |
 │ where the first part of   │                       |
 │ the first PPDU is used to │                       |
 │ carry data information    │                       |
 └───────────────────────────┘                       |
     |                                                |
     |── S702: The first part of the first PPDU ─────▶|
     |                                                |
```

FIG. 7

## Description

This application claims priority to Chinese Patent Application No. 202311051673.5, filed with the China National Intellectual Property Administration on August 18, 2023 and entitled "COMMUNICATION METHOD AND COMMUNICATION APPARATUS", which is incorporated herein by reference in its entirety.

## TECHNICAL FIELD

This application relates to the field of communication technologies, and more specifically, to a communication method and a communication apparatus.

## BACKGROUND

In high-frequency communication of a wireless local area network (wireless local area network, WLAN), to better use an existing design of a physical layer protocol data unit (physical layer protocol data unit, PPDU) in low-frequency communication, a solution of using an "upclocking" version of a low-frequency PPDU as a high-frequency PPDU for transmission is proposed. For example, a PPDU that is originally used for communication in a 40 MHz bandwidth may be used to implement communication in a 320 MHz bandwidth through 8x upclocking processing.

Currently, a ratio between a subcarrier spacing of a data part of a PPDU and a subcarrier spacing of a preamble signaling part of the PPDU before the upclocking operation is the same as that after the upclocking operation. In other words, the upclocking operation is also an operation performed on the entire PPDU. For example, the subcarrier spacing of the data part of the PPDU and the subcarrier spacing of the preamble signaling part of the PPDU are both amplified according to a same amplification multiple. Requirements of different devices cannot be met because the ratio between the subcarrier spacing of the data part of the PPDU and the subcarrier spacing of the preamble signaling part of the PPDU is relatively fixed. For example, a device with relatively good performance requires a relatively small subcarrier spacing of the data part to improve transmission efficiency, and a device with relatively poor performance requires a relatively large subcarrier spacing of the data part to improve transmission robustness. Therefore, how to meet requirements of different devices for subcarriers of the data part is an urgent technical problem to be resolved currently.

## SUMMARY

This application provides a communication method and a communication apparatus, to meet requirements of different devices for a subcarrier spacing of a data part.

According to a first aspect, a communication method is provided, including: generating a first part of a first PPDU, where the first part of the first PPDU is used to carry data information, indices of data subcarriers of the first part of the first PPDU in a first bandwidth are the same as or partially the same as indices of data subcarriers of a first part of a second PPDU in a second bandwidth, indices of pilot subcarriers of the first part of the first PPDU in the first bandwidth are the same as or partially the same as indices of pilot subcarriers of the first part of the second PPDU in the second bandwidth, a subcarrier spacing of the first part of the first PPDU in the first bandwidth is less than a subcarrier spacing of the first part of the second PPDU in the second bandwidth, the second bandwidth is greater than the first bandwidth, the second PPDU is any one of a very high throughput (very high throughput, VHT) PPDU, a high efficiency (high efficiency, HE) PPDU, an ultra-high reliability (ultra-high reliability, UHR) PPDU, and an extremely high throughput (extreme high throughput, EHT) PPDU, and the first part of the second PPDU is used to carry data information; and sending the first part of the first PPDU.

The solution in the first aspect may be executed by a first device; or may be a chip, an integrated circuit, or the like in a first device. For ease of description, the following uses the first device as an example for description.

In an embodiment, the first device sending the first part of the first PPDU may be that the first device performs upclocking processing on the first part of the first PPDU, obtains an upclocking version of the first part, and sends the upclocking version of the first part to a second device.

By reusing a subcarrier configuration that is of the first part of the second PPDU in the corresponding bandwidth and that is defined in an existing standard, this application can support more diverse subcarrier configurations (including indices of data subcarriers, indices of pilot subcarriers, a subcarrier spacing, and the like) of the first part of the first PPDU in the first bandwidth. For example, the first bandwidth is 20 MHz, and the second bandwidth is 40 MHz/80 MHz/160 MHz. A subcarrier configuration of the first part of the first PPDU in 20 MHz may respectively correspond to a subcarrier configuration of the first part of the second PPDU in the 40 MHz/80 MHz/160 MHz bandwidth. In this way, the subcarrier configuration of the first part of the first PPDU in the first bandwidth can be flexibly adjusted, so that requirements of different devices for a subcarrier spacing of a data part can be implemented.

With reference to the first aspect, in a possible implementation, the method further includes: generating a second part of the first PPDU, where the second part of the first PPDU is used to carry signaling information, and a subcarrier spacing of the second part of the first PPDU in the first bandwidth is an integer multiple of the subcarrier spacing of the first part of the first PPDU in the first bandwidth, or the subcarrier spacing of the first part of the first PPDU in the first bandwidth is an integer multiple of a subcarrier spacing of the second part of the first PPDU in the first bandwidth; and sending the second part of the first PPDU.

In this way, compatibility between devices is ensured. In other words, all devices that support subcarrier spacings of different data parts can understand a preamble signaling part of the first PPDU.

With reference to the first aspect, in a possible implementation, the method further includes: sending indication signaling, where the indication signaling indicates the subcarrier spacing of the first part of the first PPDU in the first bandwidth.

In this way, the second device can obtain information about the subcarrier spacing of the first part of the first PPDU in the first bandwidth.

According to a second aspect, a communication method is provided, including: receiving a first part of a first PPDU, where the first part of the first PPDU is used to carry data information, indices of data subcarriers of the first part of the first PPDU in a first bandwidth are the same as or partially the same as indices of data subcarriers of a first part of a second PPDU in a second bandwidth, indices of pilot subcarriers of the first part of the first PPDU in the first bandwidth are the same as or partially the same as indices of pilot subcarriers of the first part of the second PPDU in the second bandwidth, a subcarrier spacing of the first part of the first PPDU in the first bandwidth is less than a subcarrier spacing of the first part of the second PPDU in the second bandwidth, and the second bandwidth is greater than the first bandwidth; and processing the first part of the first PPDU.

The solution in the second aspect may be executed by a second device; or may be a chip, an integrated circuit, or the like in a second device. For ease of description, the following uses the second device as an example for description.

By reusing a subcarrier configuration that is of the first part of the second PPDU in the corresponding bandwidth and that is defined in an existing standard, this application can support more diverse subcarrier configurations (including indices of data subcarriers, indices of pilot subcarriers, a subcarrier spacing, and the like) of the first part of the first PPDU in the first bandwidth. For example, the first bandwidth is 20 MHz, and the second bandwidth is 40 MHz/80 MHz/160 MHz. A subcarrier configuration of the first part of the first PPDU in 20 MHz may respectively correspond to a subcarrier configuration of the first part of the second PPDU in the 40 MHz/80 MHz/160 MHz bandwidth. In this way, the subcarrier configuration of the first part of the first PPDU in the first bandwidth can be flexibly adjusted, and a subcarrier spacing of a data part of a PPDU that is of an upclocking version and that is generated based on the first PPDU can also be flexibly adjusted, so that requirements of different devices for a ratio between the subcarrier spacing of the data part of the PPDU of the upclocking version and a subcarrier spacing of a preamble signaling part of the PPDU of the upclocking version can be met.

With reference to the second aspect, in a possible implementation, the method further includes: receiving a second part of the first PPDU, where the second part of the first PPDU is used to carry signaling information, and a subcarrier spacing of the second part of the first PPDU in the first bandwidth is an integer multiple of the subcarrier spacing of the first part of the first PPDU in the first bandwidth, or the subcarrier spacing of the first part of the first PPDU in the first bandwidth is an integer multiple of a subcarrier spacing of the second part of the first PPDU in the first bandwidth; and processing the second part of the first PPDU.

In this way, compatibility between devices is ensured. In other words, all devices that support subcarrier spacings of different data parts can understand a preamble signaling part of the first PPDU.

With reference to the second aspect, in a possible implementation, the method further includes: receiving indication signaling, where the indication signaling indicates the subcarrier spacing of the first part of the first PPDU in the first bandwidth.

In this way, the second device can obtain information about the subcarrier spacing of the first part of the first PPDU in the first bandwidth.

With reference to the method according to either one of the first aspect and the second aspect, in a possible implementation, a subcarrier spacing of the second part of the first PPDU in the first bandwidth is 312.5 kHz, and a subcarrier spacing of the first part of the first PPDU in the first bandwidth is 312.5 kHz, 156.25 kHz, or 78.125 kHz.

Specifically, this application can support more ratios between the subcarrier spacing of the first part of the first PPDU in the first bandwidth and the subcarrier spacing of the second part of the first PPDU in the first bandwidth. For example, ratio relationships such as 64:64, 64:128, and 64:256 can be supported. In this way, the subcarrier spacing of the first part of the first PPDU in the first bandwidth can be flexibly adjusted, so that requirements of different devices for the subcarrier spacing of the data part can be met.

With reference to the method according to either one of the first aspect and the second aspect, in a possible implementation, the first bandwidth is an integer multiple of 20 MHz.

In this way, compatibility with an existing standard can be implemented.

With reference to the method according to either one of the first aspect and the second aspect, in a possible implementation, the indices of the data subcarriers of the first part of the first PPDU in the first bandwidth are the same as the indices of the data subcarriers of the first part of the second PPDU in the second bandwidth, the indices of the pilot subcarriers of the first part of the first PPDU in the first bandwidth are the same as the indices of the pilot subcarriers of the first part of the second PPDU in the second bandwidth, the subcarrier spacing of the first part of the first PPDU in the first bandwidth is 312.5 kHz, the first bandwidth is 20 MHz, and indices of subcarriers of the first part of the first PPDU in the first bandwidth include: $K_{SP} = \{-21, -7, 7, 21\}$, and $K_{SD} = \{-28, ..., 28\} - K_{SP} - \{0\}$, where $K_{SP}$ indicates an index set of pilot subcarriers, $K_{SD}$ indicates an index set of data subcarriers, and $K_{SD}$ includes 52 indices.

In this way, the subcarrier configuration of the first part of the first PPDU in the first bandwidth can be configured based on the subcarrier indices.

With reference to the method according to either one of the first aspect and the second aspect, in a possible implementation, the indices of the data subcarriers of the first part of the first PPDU in the first bandwidth are the same as the indices of the data subcarriers of the first part of the second PPDU in the second bandwidth, the indices of the pilot subcarriers of the first part of the first PPDU in the first bandwidth are the same as the indices of the pilot subcarriers of the first part of the second PPDU in the second bandwidth, the subcarrier spacing of the first part of the first PPDU in the first bandwidth is 156.25 kHz, the first bandwidth is 20 MHz, and indices of subcarriers of the first part of the first PPDU in the first bandwidth include: $K_{SP} = \{-53, -25, -11, 11, 25, 53\}$, and $K_{SD} = \{-58, ..., 58\} - K_{SP} - \{-1, 0, 1\}$, where $K_{SP}$ indicates an index set of pilot subcarriers, $K_{SD}$ indicates an index set of data subcarriers, and $K_{SD}$ includes 108 indices.

In this way, another subcarrier configuration of the first part of the first PPDU in the first bandwidth can be configured based on the subcarrier indices.

With reference to the method according to either one of the first aspect and the second aspect, in a possible implementation, the indices of the data subcarriers of the first part of the first PPDU in the first bandwidth are the same as the indices of the data subcarriers of the first part of the second PPDU in the second bandwidth, the indices of the pilot subcarriers of the first part of the first PPDU in the first bandwidth are the same as the indices of the pilot subcarriers of the first part of the second PPDU in the second bandwidth, the subcarrier spacing of the first part of the first PPDU in the first bandwidth is 78.125 kHz, the first bandwidth is 20 MHz, and indices of subcarriers of the first part of the first PPDU in the first bandwidth include: $K_{SP} = \{-103, -75, -39, -11, 11, 39, 75, 103\}$, and $K_{SD} = \{-122, ..., 122\} - K_{SP} - \{-1, 0, 1\}$, where $K_{SP}$ indicates an index set of pilot subcarriers, $K_{SD}$ indicates an index set of data subcarriers, and $K_{SD}$ includes 234 indices.

In this way, the subcarrier configuration of the first part of the first PPDU in the first bandwidth can be configured based on the subcarrier indices.

With reference to the method according to either one of the first aspect and the second aspect, in a possible implementation, the first bandwidth is 20 MHz, and indices of subcarriers of the second part of the first PPDU in the first bandwidth include: $K_{SP} = \{-21, -7, 7, 21\}$, and $K_{SD} = \{-28, ..., 28\} - K_{SP} - \{0\}$, where $K_{SP}$ indicates an index set of pilot subcarriers, $K_{SD}$ indicates an index set of data subcarriers, and $K_{SD}$ includes 52 indices.

In this way, compatibility with an existing standard can be implemented.

With reference to the method according to either one of the first aspect and the second aspect, in a possible implementation, the first bandwidth is 20 MHz, and indices of subcarriers of the second part of the first PPDU in the first bandwidth include: $K_{SP} = \{-21, -7, 7, 21\}$, and $K_{SD} = \{-26, ..., 26\} - K_{SP} - \{0\}$, where $K_{SP}$ indicates an index set of pilot subcarriers, $K_{SD}$ indicates an index set of data subcarriers, and $K_{SD}$ includes 48 indices.

With reference to the method according to either one of the first aspect and the second aspect, in a possible implementation, the indices of the pilot subcarriers of the first part of the first PPDU in the first bandwidth are partially the same as the indices of the pilot subcarriers of the first part of the second PPDU in the second bandwidth, and being partially the same includes: when a quantity of pilot subcarriers of the first part of the first PPDU in the first bandwidth is the same as a quantity of pilot subcarriers of the first part of the second PPDU in the second bandwidth, at least one of the indices of the pilot subcarriers of the first part of the first PPDU in the first bandwidth is different from the indices of the pilot subcarriers of the first part of the second PPDU in the second bandwidth; or when a quantity of pilot subcarriers of the first part of the first PPDU in the first bandwidth is greater than a quantity of pilot subcarriers of the first part of the second PPDU in the second bandwidth, the pilot subcarriers of the first part of the first PPDU in the first bandwidth further include at least one of a null subcarrier and a guard subcarrier in the first bandwidth.

In an example, when the quantity of pilot subcarriers of the first part of the first PPDU in the first bandwidth is the same as the quantity of pilot subcarriers of the first part of the second PPDU in the second bandwidth, at least one of the indices of the pilot subcarriers of the first part of the first PPDU in the first bandwidth is different from the indices of the pilot subcarriers of the first part of the second PPDU in the second bandwidth. For example, the indices of the pilot subcarriers of the first part of the first PPDU in the first bandwidth are: {1, 3, 5, 7, 9, 11, 13, 15, 17, 19}, and the indices of the pilot subcarriers of the first part of the second PPDU in the second bandwidth are: {1, 2, 3, 4, 5, 6, 7, 8, 9, 10}.

In an example, when the quantity of pilot subcarriers of the first part of the first PPDU in the first bandwidth is greater than the quantity of pilot subcarriers of the first part of the second PPDU in the second bandwidth, the indices of the pilot subcarriers of the first part of the first PPDU in the first bandwidth include all the indices of the pilot subcarriers of the first part of the second PPDU in the second bandwidth. For example, the indices of the pilot subcarriers of the first part of the first PPDU in the first bandwidth are: {1, 2, 3, 4, 5, 6, 7, 8, 9, 10, 11, 12}, and the indices of the pilot subcarriers of the first part of the second PPDU in the second bandwidth are: {1, 2, 3, 4, 5, 6, 7, 8, 9, 10}.

For example, when the quantity of pilot subcarriers of the first part of the first PPDU in the first bandwidth is greater than the quantity of pilot subcarriers of the first part of the second PPDU in the second bandwidth, the indices of the pilot subcarriers of the first part of the first PPDU in the first bandwidth include at least one of the indices of the pilot subcarriers of the first part of the second PPDU in the second bandwidth; or at least one of the indices of the pilot subcarriers of the first part of the first PPDU in the first bandwidth is the same as the indices of the pilot subcarriers of the first part of the second PPDU in the second bandwidth. For example, the indices of the pilot subcarriers of the first part of the first PPDU in the first bandwidth are {1, 2, 3, 4, 5, 6, 7, 8, 9, 11, 12, 13}, {1, 2, 3, 4, 5, 6, 12, 13, 14, 15, 16, 17}, or {1, 12, 13, 14, 15, 16, 22, 23, 24, 25, 26, 27}, and the indices of the pilot subcarriers of the first part of the second PPDU in the second bandwidth are {1, 2, 3, 4, 5, 6, 7, 8, 9, 10}.

In this way, configurations of the pilot subcarriers of the first part of the first PPDU in the first bandwidth can be more diverse.

Therefore, the quantity of pilot subcarriers of the first part of the first PPDU in the first bandwidth can be increased, and channel estimation performance can be improved.

With reference to the method according to either one of the first aspect and the second aspect, in a possible implementation, the pilot subcarriers of the second part of the first PPDU in the first bandwidth further include at least one of a null subcarrier and a guard subcarrier in the first bandwidth.

Therefore, the quantity of pilot subcarriers of the second part of the first PPDU in the first bandwidth can be increased, and channel estimation performance can be improved.

According to a third aspect, a communication method is provided, including: generating a first part of a first PPDU, where the first part of the first PPDU is used to carry data information, a sum of a quantity of data subcarriers and a quantity of pilot subcarriers corresponding to the first part of the first PPDU is greater than or equal to a subcarrier quantity of a first resource unit (resource unit, RU) or a first multi-resource unit (multi-RU, MRU), and a subcarrier spacing corresponding to the first part of the first PPDU is greater than a subcarrier spacing of the first RU or the first MRU; and sending the first part of the first PPDU.

The solution in the third aspect may be executed by a third device; or may be a chip, an integrated circuit, or the like in a third device. For ease of description, the following uses the third device as an example for description.

By using a subcarrier configuration that is of an RU or an MRU and that is defined in an existing standard, this application can support more diverse subcarrier configurations (including indices of data subcarriers, indices of pilot subcarriers, a subcarrier spacing, and the like) corresponding to the first part of the first PPDU. For example, a subcarrier configuration of a 52-tone RU/106-tone RU may be modified to obtain the subcarrier configuration corresponding to the first part of the first PPDU. In this way, the subcarrier configuration of the first part of the first PPDU can be flexibly adjusted, so that requirements of different devices for a subcarrier spacing of a data part can be met.

With reference to the third aspect, in a possible implementation, the method further includes: generating a second part of the first PPDU, where the second part of the first PPDU is used to carry signaling information, and a subcarrier spacing corresponding to the second part of the first PPDU is an integer multiple of a subcarrier spacing corresponding to the first part of the first PPDU, or a subcarrier spacing corresponding to the first part of the first PPDU is an integer multiple of a subcarrier spacing corresponding to the second part of the first PPDU; and sending the second part of the first PPDU.

With reference to the third aspect, in a possible implementation, the method further includes: receiving indication signaling, where the indication signaling indicates the subcarrier spacing corresponding to the first part of the first PPDU.

In this way, the second device can obtain information about the subcarrier spacing of the first part of the first PPDU in the first bandwidth.

According to a fourth aspect, a communication method is provided, including: receiving a first part of a PPDU, where the first part of the first PPDU is used to carry data information, a sum of a quantity of data subcarriers and a quantity of pilot subcarriers corresponding to the first part of the first PPDU is greater than or equal to a subcarrier quantity of a first resource unit RU or a first multi-resource unit MRU, and a subcarrier spacing corresponding to the first part of the first PPDU is greater than a subcarrier spacing of the first RU or the first MRU; and processing the first part of the first PPDU.

The solution in the fourth aspect may be executed by a second device; or may be a chip, an integrated circuit, or the like in a second device. For ease of description, the following uses the second device as an example for description.

With reference to the fourth aspect, in a possible implementation, the method further includes: receiving a second part of the first PPDU, where the second part of the first PPDU is used to carry signaling information, and a subcarrier spacing corresponding to the second part of the first PPDU is an integer multiple of a subcarrier spacing corresponding to the first part of the first PPDU, or a subcarrier spacing corresponding to the first part of the first PPDU is an integer multiple of a subcarrier spacing corresponding to the second part of the first PPDU; and processing the second part.

With reference to the fourth aspect, in a possible implementation, the method further includes: receiving indication signaling, where the indication signaling indicates the subcarrier spacing corresponding to the first part of the first PPDU.

With reference to the method according to either one of the third aspect and the fourth aspect, in a possible implementation, the first RU is an RU whose subcarrier quantity is the closest to a total subcarrier quantity corresponding to the first part of the first PPDU in existing RUs, or the first MRU is an MRU whose subcarrier quantity is the closest to a total subcarrier quantity corresponding to the first part of the first PPDU in existing MRUs.

In this way, a quantity of data subcarriers can be maximized based on an existing RU generating module.

With reference to the method according to either one of the third aspect and the fourth aspect, in a possible implementation, the subcarrier spacing corresponding to the second part of the first PPDU is 312.5 kHz, and the subcarrier spacing corresponding to the first part of the first PPDU is 312.5 kHz or 156.25 kHz.

With reference to the method according to either one of the third aspect and the fourth aspect, in a possible implementation, the first RU or the first MRU is any one of the following: a 52-tone RU, a 106-tone RU, a 242-tone RU, a 484-tone RU, a 996-tone RU, a 2*996-tone RU, or a 4*996-tone RU.

In this way, compatibility with an existing standard can be implemented.

With reference to the method according to either one of the third aspect and the fourth aspect, in a possible implementation, the subcarrier spacing corresponding to the first part of the first PPDU is 312.5 kHz, the first RU or the first MRU is a 52-tone RU, and indices of subcarriers corresponding to the first part of the first PPDU include: $K_{SP} = \{-21, -7, 7, 21\}$, and $K_{SD} = \{-26, ..., 26\} - K_{SP} - \{0\}$, where $K_{SP}$ indicates an index set of pilot subcarriers, $K_{SD}$ indicates an index set of data subcarriers, and $K_{SD}$ includes 48 indices.

In this way, the subcarrier configuration of the first part of the first PPDU can be configured based on the subcarrier indices.

With reference to the method according to either one of the third aspect and the fourth aspect, in a possible implementation, the subcarrier spacing corresponding to the first part of the first PPDU is 312.5 kHz, the first RU or the first MRU is a 52-tone RU, and indices of subcarriers corresponding to the first part of the first PPDU include: $K_{SP} = \{-20, -6, 6, 20\}$, and $K_{SD} = \{-26, ..., 26\} - K_{SP} - \{0\}$, where $K_{SP}$ indicates an index set of pilot subcarriers, $K_{SD}$ indicates an index set of data subcarriers, and $K_{SD}$ includes 48 indices.

In this way, the subcarrier configuration of the first part of the first PPDU can be configured based on the subcarrier indices.

With reference to the method according to either one of the third aspect and the fourth aspect, in a possible implementation, the subcarrier spacing corresponding to the first part of the first PPDU is 156.25 kHz, the first RU or the first MRU is a 106-tone RU, and indices of subcarriers corresponding to the first part of the first PPDU include: $K_{SP} = \{-47, -21, 21, 47\}$, and $K_{SD} = \{-53, ..., 53\} - K_{SP} - \{-0\}$, where $K_{SP}$ indicates an index set of pilot subcarriers, $K_{SD}$ indicates an index set of data subcarriers, and $K_{SD}$ includes 102 indices.

In this way, the subcarrier configuration of the first part of the first PPDU can be configured based on the subcarrier indices.

With reference to the method according to either one of the third aspect and the fourth aspect, in a possible implementation, the subcarrier spacing corresponding to the first part of the first PPDU is 156.25 kHz, the first RU or the first MRU is a 106-tone RU, and indices of subcarriers corresponding to the first part of the first PPDU satisfy: $K_{SP} = \{-48, -22, 22, 48\}$, and $K_{SD} = \{-53, ..., 53\} - K_{SP} - \{0\}$, where $K_{SP}$ indicates an index set of pilot subcarriers, $K_{SD}$ indicates an index set of data subcarriers, and $K_{SD}$ includes 102 indices.

In this way, the subcarrier configuration of the first part of the first PPDU can be configured based on the subcarrier indices.

With reference to the method according to either one of the third aspect and the fourth aspect, in a possible implementation, the subcarrier spacing corresponding to the second part of the first PPDU is 312.5 kHz, and indices of subcarriers corresponding to the second part of the first PPDU satisfy: $K_{SP} = \{-21, -7, 7, 211$, and $K_{SD} = \{-26, ..., 26\} - K_{SP} - \{0\}$, where $K_{SP}$ indicates an index set of pilot subcarriers, $K_{SD}$ indicates an index set of data subcarriers, and $K_{SD}$ includes 48 indices.

In this way, the subcarrier configuration of the second part of the first PPDU can be configured based on the subcarrier indices.

With reference to the method according to either one of the third aspect and the fourth aspect, in a possible implementation, the subcarrier spacing corresponding to the second part of the first PPDU is 312.5 kHz, and indices of subcarriers corresponding to the second part of the first PPDU satisfy: $K_{SP} = \{-21, -7, 7, 21\}$, and $K_{SD} = \{-28, ..., 28\} - K_{SP} - \{0\}$, where $K_{SP}$ indicates an index set of pilot subcarriers, $K_{SD}$ indicates an index set of data subcarriers, and $K_{SD}$ includes 48 indices.

In this way, the subcarrier configuration of the second part of the first PPDU can be configured based on the subcarrier indices.

With reference to the method according to either one of the third aspect and the fourth aspect, in a possible implementation, the pilot subcarriers corresponding to the first part of the first PPDU further include at least one of a null subcarrier and a guard subcarrier in the bandwidth corresponding to the first part of the first PPDU.

Therefore, the quantity of pilot subcarriers of the first part of the first PPDU in the first bandwidth can be increased, and channel estimation performance can be improved.

With reference to the method according to either one of the third aspect and the fourth aspect, in a possible implementation, the pilot subcarriers corresponding to the second part of the first PPDU further include at least one of a null subcarrier and a guard subcarrier in the bandwidth corresponding to the second part of the first PPDU.

Therefore, the quantity of pilot subcarriers of the second part of the first PPDU in the first bandwidth can be increased, and channel estimation performance can be improved.

According to a fifth aspect, a communication method is provided, including: generating a first PPDU, where the first PPDU includes a first part, the first part of the first PPDU is used to carry data information, indices of data subcarriers of the first part of the first PPDU in a first bandwidth are the same as or partially the same as indices of data subcarriers of a first part of a second PPDU in a second bandwidth, indices of pilot subcarriers of the first part of the first PPDU in the first bandwidth are the same as or partially the same as indices of pilot subcarriers of the first part of the second PPDU in the second bandwidth, a subcarrier spacing of the first part of the first PPDU in the first bandwidth is less than a subcarrier spacing of the first part of the second PPDU in the second bandwidth, the second bandwidth is greater than the first bandwidth, the second PPDU is any one of a VHT PPDU, an HE PPDU, a UHR PPDU, and an EHT PPDU, and the first part of the second PPDU is used to carry data information; and sending the first PPDU.

With reference to the fifth aspect, in a possible implementation, the first PPDU further includes a second part. The second part of the first PPDU is used to carry signaling information. A subcarrier spacing of the second part of the first PPDU in the first bandwidth is an integer multiple of the subcarrier spacing of the first part of the first PPDU in the first bandwidth, or the subcarrier spacing of the first part of the first PPDU in the first bandwidth is an integer multiple of a subcarrier spacing of the second part of the first PPDU in the first bandwidth.

For corresponding descriptions of the first part of the first PPDU in the fifth aspect, refer to the related descriptions in the first aspect. Details are not described again.

According to a sixth aspect, a communication method is provided, including: receiving a first PPDU, where the first PPDU includes a first part, the first part of the first PPDU is used to carry data information, indices of data subcarriers of the first part of the first PPDU in a first bandwidth are the same as or partially the same as indices of data subcarriers of a first part of a second PPDU in a second bandwidth, indices of pilot subcarriers of the first part of the first PPDU in the first bandwidth are the same as or partially the same as indices of pilot subcarriers of the first part of the second PPDU in the second bandwidth, a subcarrier spacing of the first part of the first PPDU in the first bandwidth is less than a subcarrier spacing of the first part of the second PPDU in the second bandwidth, the second bandwidth is greater than the first bandwidth, the second PPDU is any one of a VHT PPDU, an HE PPDU, a UHR PPDU, and an EHT PPDU, and the first part of the second PPDU is used to carry data information; and processing the first PPDU.

With reference to the sixth aspect, in a possible implementation, the first PPDU further includes a second part. The second part of the first PPDU is used to carry signaling information. A subcarrier spacing of the second part of the first PPDU in the first bandwidth is an integer multiple of the subcarrier spacing of the first part of the first PPDU in the first bandwidth, or the subcarrier spacing of the first part of the first PPDU in the first bandwidth is an integer multiple of a subcarrier spacing of the second part of the first PPDU in the first bandwidth.

For corresponding descriptions of the first part of the first PPDU in the sixth aspect, refer to the related descriptions in the first aspect. Details are not described again.

According to a seventh aspect, a communication apparatus is provided. The communication apparatus is configured to perform the method according to any one of the first aspect to the fourth aspect. Specifically, the communication apparatus includes units and/or modules configured to perform the method according to the first aspect or any one of the foregoing implementations of the first aspect, or includes units and/or modules configured to perform the method according to the second aspect or any one of the foregoing implementations of the second aspect, or includes units and/or modules configured to perform the method according to the third aspect or any one of the foregoing implementations of the third aspect, or includes units and/or modules configured to perform the method according to the fourth aspect or any one of the foregoing implementations of the fourth aspect, or includes units and/or modules configured to perform the method according to the fifth aspect or any one of the foregoing implementations of the fifth aspect, or includes units and/or modules configured to perform the method according to the sixth aspect or any one of the foregoing implementations of the sixth aspect.

In an implementation, the communication apparatus is a device (for example, a first device or a second device). When the communication apparatus is the device, a transceiver unit may be a transceiver or an input/output interface, and a processing unit may be at least one processor. Optionally, the transceiver may be a transceiver circuit. Optionally, the input/output interface may be an input/output circuit.

In another implementation, the communication apparatus is a chip, a chip system, or a circuit used in a device (for example, a first device or a second device). When the communication apparatus is the chip, the chip system, or the circuit used in the device, a transceiver unit may be an input/output interface, an interface circuit, an output circuit, an input circuit, a pin, a related circuit, or the like in the chip, the chip system, or the circuit; and a processing unit may be at least one processor, a processing circuit, a logic circuit, or the like.

According to an eighth aspect, a communication apparatus is provided. The apparatus includes: a memory, configured to store a program; and at least one processor, configured to execute a computer program or instructions stored in the memory, to perform the method according to the first aspect or any one of the implementations of the first aspect, or perform the method according to the second aspect or any one of the implementations of the second aspect, or perform the method according to the third aspect or any one of the implementations of the third aspect, or perform the method according to the fourth aspect or any one of the implementations of the fourth aspect, or perform the method according to the fifth aspect or any one of the implementations of the fifth aspect, or perform the method according to the sixth aspect or any one of the implementations of the sixth aspect.

In an implementation, the communication apparatus is a device (for example, a first device or a second device).

In another implementation, the apparatus is a chip, a chip system, or a circuit used in a device (for example, a first device or a second device).

According to a ninth aspect, this application provides a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code executed by a device. The program code includes instructions used to perform the method according to the first aspect or any one of the implementations of the first aspect, or includes instructions used to perform the method according to the second aspect or any one of the implementations of the second aspect, or includes instructions used to perform the method according to the third aspect or any one of the implementations of the third aspect, or includes instructions used to perform the method according to the fourth aspect or any one of the implementations of the fourth aspect, or includes instructions used to perform the method according to the fifth aspect or any one of the implementations of the fifth aspect, or includes instructions used to perform the method according to the sixth aspect or any one of the implementations of the sixth aspect.

According to an eleventh aspect, a computer program product including instructions is provided. When the computer program product runs on a computer, the computer is enabled to perform the method according to the first aspect or any one of the implementations of the first aspect, or the computer is enabled to perform the method according to the second aspect or any one of the implementations of the second aspect, or the computer is enabled to perform the method according to the third aspect or any one of the implementations of the third aspect, or the computer is enabled to perform the method according to the fourth aspect or any one of the implementations of the fourth aspect, the computer is enabled to perform the method according to the fifth aspect or any one of the implementations of the fifth aspect, or the computer is enabled to perform the method according to the sixth aspect or any one of the implementations of the sixth aspect.

According to a twelfth aspect, a chip is provided. The chip includes a processor and an input/output interface. The processor reads, through the input/output interface, instructions stored in a memory, to perform the method according to the first aspect or any one of the implementations of the first aspect, or perform the method according to the second aspect or any one of the implementations of the second aspect, or perform the method according to the third aspect or any one of the implementations of the third aspect, or perform the method according to the fourth aspect or any one of the implementations of the fourth aspect.

Optionally, in an implementation, the chip further includes a memory. The memory stores a computer program or instructions. The processor is configured to execute the computer program or the instructions stored in the memory. When the computer program or instructions are executed, the processor is configured to perform the method according to the first aspect or any one of the implementations of the first aspect, or perform the method according to the second aspect or any one of the implementations of the second aspect, or perform the method according to the third aspect or any one of the implementations of the third aspect, or perform the method according to the fourth aspect or any one of the implementations of the fourth aspect, or perform the method according to the fifth aspect or any one of the implementations of the fifth aspect, or perform the method according to the sixth aspect or any one of the implementations of the sixth aspect.

According to a thirteenth aspect, a communication system is provided, including the foregoing first device and the foregoing second device.

## BRIEF DESCRIPTION OF DRAWINGS

FIG. 1 is a diagram of an application scenario according to an embodiment of this application;
FIG. 2 is a diagram of a structure of a communication apparatus according to an embodiment of this application;
FIG. 3 is a diagram of subcarrier distribution and RU distribution in a 20 MHz bandwidth;

FIG. 4 is a diagram of subcarrier distribution and RU distribution in a 40 MHz bandwidth;

FIG. 5 is a diagram of subcarrier distribution and RU distribution in an 80 MHz bandwidth;

FIG. 6 is a diagram of PPDU formats in several low-frequency communication protocols;

FIG. 7 is an interaction flowchart of a communication method according to an embodiment of this application;

FIG. 8 is a diagram of a relationship between a first bandwidth and a second bandwidth;

FIG. 9 is a diagram of another relationship between a first bandwidth and a second bandwidth;

FIG. 10 is a diagram of still another relationship between a first bandwidth and a second bandwidth;

FIG. 11 is an interaction flowchart of another communication method according to an embodiment of this application;

FIG. 12 is a diagram of a relationship between a first part and an RU;

FIG. 13 is a diagram of a 52-tone RU;

FIG. 14 is a diagram of another relationship between a first part and an RU;

FIG. 15 is a diagram of a 106-tone RU;

FIG. 16 is a diagram of a second part of a first PPDU in a large bandwidth;

FIG. 17 is a diagram of interaction signaling between a first device and a second device;

FIG. 18 is a block diagram of a communication apparatus according to an embodiment of this application;

FIG. 19 is a block diagram of another communication apparatus according to an embodiment of this application; and

FIG. 20 is a block diagram of a chip system according to an embodiment of this application.

## DESCRIPTION OF EMBODIMENTS

The following describes technical solutions of this application with reference to accompanying drawings.

The technical solutions provided in embodiments of this application may be applied to a wireless local area network (wireless local area network, WLAN) scenario, for example, support related institute of electrical and electronics engineers (institute of electrical and electronics engineers, IEEE) 802.11 standards, such as the 802.11a/b/g standard, the 802.11n standard, the 802.11ac standard, the 802.11ax standard, and a next-generation Wi-Fi protocol of IEEE 802.11ax, for example, 802.11be, Wi-Fi 7, extremely high throughput (extremely high throughput, EHT), 802.11ad, 802.11ay, or 802.11bf, or for another example, a next generation of 802.11be like Wi-Fi 8; may be further applied to an ultra-wideband (ultra-wideband, UWB)-based wireless personal area network system, for example, 802.15 series standards; and may be further applied to a sensing (sensing) system, for example, 802.11bf series standards. The 802.11n standard is referred to as high throughput (high throughput, HT), the 802.11ac standard is referred to as a very high throughput (very high throughput, VHT) standard, the 802.11ax standard is referred to as a high efficiency (high efficient, HE) standard, and the 802.11be standard is referred to as an extremely high throughput (extremely high throughput, EHT) standard. 802.11bf includes two major categories of standards: a low-frequency (for example, sub-7 GHz) standard and a high-frequency (for example, 60 GHz) standard. An implementation of sub-7 GHz mainly depends on 802.11ac, 802.11ax, 802.11be, and a next-generation standard. An implementation of 60 GHz mainly depends on 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any appropriate wireless network.

The technical solutions in embodiments of this application may be further applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a 6th generation (6th generation, 6G) system, an internet of things (internet of things, IoT) network, or vehicle-to-everything (vehicle to x, V2X).

The communication systems to which this application is applicable are merely examples for description, and are not limited thereto. This is described herein once for all, and details are not described below again.

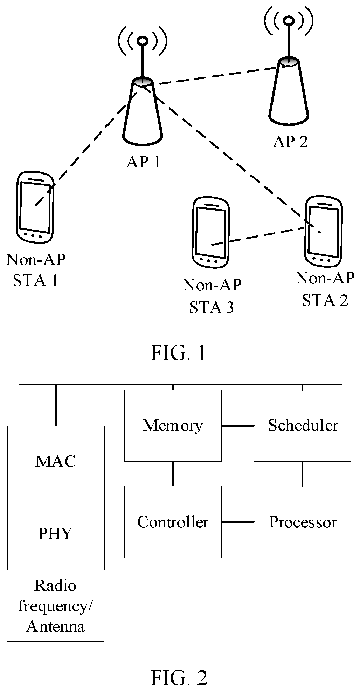

FIG. 1 is a diagram of an application scenario according to an embodiment of this application. As shown in FIG. 1, a communication method provided in this application is applicable to data communication between stations (stations, STAs). The station may be an access point (access point, AP) station, or may be a non-access point station (none access point station, non-AP STA). The access point station and the non-access point station are respectively referred to as an AP and a non-AP station for short. Specifically, the solutions of this application are applicable to data communication between an AP and one or more non-AP stations (for example, data communication between an AP 1, and a non-AP STA 1 and a non-AP STA 2), and are also applicable to data communication between APs (for example, data communication between the AP 1 and an AP 2) and data communication between non-AP STAs (for example, data communication between the non-AP STA 2 and a non-AP STA 3).

The access point may be a node through which a terminal (for example, a mobile phone) accesses a wired (or wireless) network, and is mainly deployed at home, in a building, or on a campus, with a typical coverage radius ranging from tens of meters to more than 100 meters, or certainly, may be deployed outdoors. The access point is equivalent to a bridge that connects a wired network and a wireless network, and is mainly used to connect various wireless network clients together and then connect the wireless network to the Ethernet.

Specifically, the access point may be a terminal or a network device with a Wi-Fi chip, or may be a terminal or a network device including a chip for accessing a wired (wireless) network. The network device may be a server, a router, a switch, a bridge, a computer, a mobile phone, a relay station, a vehicle-mounted device, a wearable device, a network device in a 5G network, a network device in a 6G network, a network device in a public land mobile communication network (public land mobile network, PLMN), or the like. This is not limited in this embodiment of this application. The access point may be a device that supports a Wi-Fi standard. For example, the access point may alternatively support one or more of the following IEEE 802.11 series standards: 802.11a, 802.11b, 802.11g, 802.11n, 802.11ac, 802.11ax, 802.11be, 802.11ad, and 802.11ay.

The non-AP station may be a wireless communication chip, a wireless sensor, a wireless communication terminal, or the like, and may also be referred to as a user, user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, an internet of things device, a wearable device, a terminal device in a 5G network, a terminal device in a 6G network, a terminal device in a PLMN, or the like. This is not limited in embodiments of this application. The non-AP station may be a device that supports a WLAN standard. For example, the non-AP station may support one or more of the following IEEE 802.11 series standards: 802.11a, 802.11b, 802.11g, 802.11n, 802.11ac, 802.11ax, 802.11be, 802.11ad, and 802.11ay.

For example, the non-AP station may be a mobile phone, a tablet computer, a set-top box, a smart television, a smart wearable device, a vehicle-mounted communication device, a computer, an IoT node, a sensor, a smart home device like a smart camera, a smart remote control, or a smart water/electricity meter, or a sensor in a smart city.

The AP or the non-AP station may include a transmitter, a receiver, a memory, a processor, and the like. The transmitter and the receiver are respectively configured to send and receive packet structures. The memory is configured to store signaling information, store a preset value that is pre-agreed-upon, and the like. The processor is configured to parse the signaling information, process related data, and the like.

For example, FIG. 2 is a diagram of a structure of a communication apparatus according to an embodiment of this application. The apparatus shown in FIG. 2 may be an AP or a non-AP station. A medium access control (medium access control, MAC) layer processing module, a physical (physical, PHY) layer processing module, radio frequency/an antenna, and the like are configured to implement related functions of the foregoing transmitter and receiver. As shown in FIG. 2, in addition to the MAC layer processing module, the PHY layer processing module, the radio frequency/antenna, a memory, and a processor, the apparatus may further include a controller and a scheduler.

It should be understood that FIG. 2 shows merely an example of an apparatus according to this application, and does not constitute limitation on this application. For example, the apparatus may alternatively not include the controller and/or the scheduler.

For ease of understanding of embodiments of this application, the following first describes several nouns or terms in this application.

1. Subcarrier: Wireless communication signals are transmitted within a specific channel bandwidth. An orthogonal frequency division multiplexing (orthogonal frequency division multiplexing, OFDM) technology can be used to divide the channel bandwidth into a plurality of frequency components based on a specific frequency spacing. These components are referred to as subcarriers.

2. Subcarrier distribution (Tone Plan) defined based on consecutive RUs

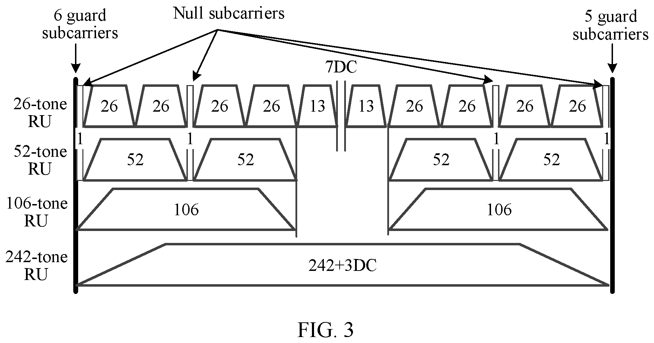

FIG. 3 is a diagram of subcarrier distribution and RU distribution in a 20 MHz bandwidth. As shown in FIG. 3, when a bandwidth is 20 MHz, the entire bandwidth may include an entire 242-tone RU, or may include a 26-tone RU, a 52-tone RU, a 106-tone RU, or a combination of at least two of the 26-tone RU, the 52-tone RU, and the 106-tone RU. The 26-tone RU indicates that the RU includes 26 subcarriers, the 52-tone RU indicates that the RU includes 52 subcarriers, the 106-tone RU indicates that the RU includes 106 subcarriers, and so on. In addition to a subcarrier used for data transmission, the RU further includes a pilot subcarrier. In addition to subcarriers included in the RU, the bandwidth further includes some guard (guard) subcarriers, null subcarriers, or direct current (direct current, DC) subcarriers.

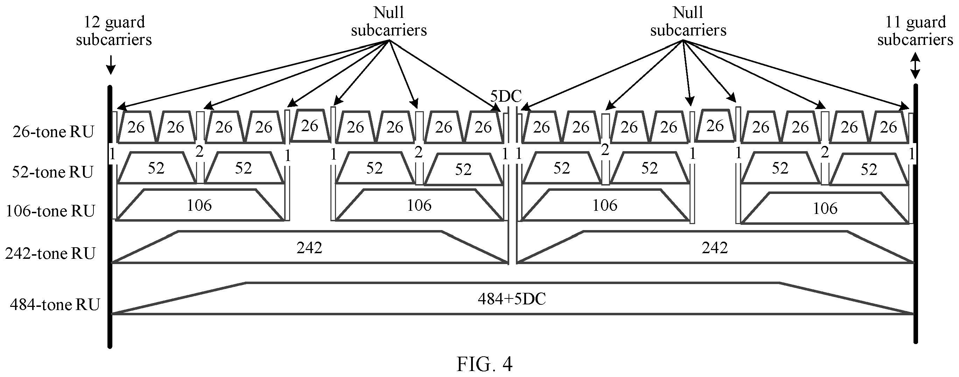

FIG. 4 is a diagram of subcarrier distribution and RU distribution in a 40 MHz bandwidth. When a bandwidth is 40 MHz, the entire bandwidth is approximately equivalent to a replication of subcarrier distribution of 20 MHz. The entire bandwidth may include an entire 484-tone RU, or may include any one of a 26-tone RU, a 52-tone RU, a 106-tone RU, and a 242-tone RU, or a combination of at least two of the 26-tone RU, the 52-tone RU, the 106-tone RU, and the 242-tone RU.

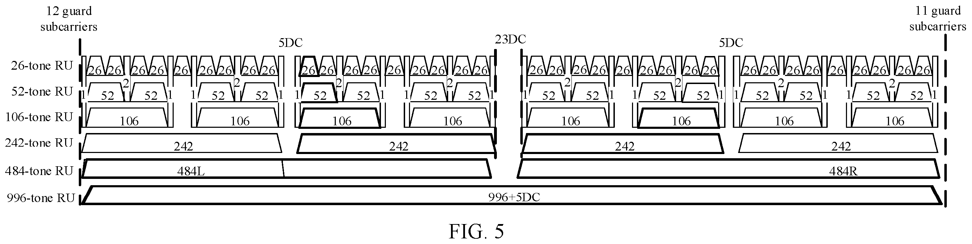

FIG. 5 is a diagram of subcarrier distribution and RU distribution in an 80 MHz bandwidth. When a bandwidth is 80 MHz, the entire bandwidth may include four 242-tone RUs; an entire 996-tone RU; or a 26-tone RU, a 52-tone RU, a 106-tone RU, a 242-tone RU, a 484-tone RU, or any combination thereof.

When a bandwidth is 160 MHz or 80+80 MHz, the entire bandwidth may be considered as a replication of subcarrier distribution of two 80 MHz. The entire bandwidth may include an entire 2*996-tone RU, or may include any one of a 26-tone RU, a 52-tone RU, a 106-tone RU, a 242-tone RU, a 484-tone RU, and a 996-tone RU, or a combination of at least two of the 26-tone RU, the 52-tone RU, the 106-tone RU, the 242-tone RU, the 484-tone RU, and the 996-tone RU. When a bandwidth is 240 MHz or 160+80 MHz, the entire bandwidth may be considered as a replication of subcarrier distribution of three 80 MHz. When a bandwidth is 320 MHz or 160+160 MHz, the entire bandwidth may be considered as a replication of subcarrier distribution of four 80 MHz. Distribution diagrams are not separately provided herein.

The following provides subcarrier index ranges of different types of RUs in different bandwidths.

First, a 20 MHz bandwidth is used for description. A subcarrier spacing (that is, a subcarrier spacing defined in the finalized 802.11ax standard) of a current WLAN system is 78.125 kHz. In this case, the 20 MHz bandwidth includes 256 consecutive subcarriers in total, the subcarriers are numbered in ascending order of subcarrier frequencies, and subcarrier index values are -128, -127, ..., 0, ..., 126, and 127, that is, starting from -128 and ending at 127 at intervals of 1. Subcarriers of the RU are classified into two types: a data (data) subcarrier and a pilot (pilot) subcarrier respectively. The data subcarrier is used to carry data information from an upper layer. The pilot subcarrier is used to transmit a fixed value, and is used by a receive end to estimate a phase for phase correction. Table 1 shows index values of RUs in a 20 MHz bandwidth, and a subcarrier index range and indices of pilot subcarriers corresponding to each RU. Herein, RU# represents an index of an RU, [a:b] represents that index values of subcarriers included in the RU start from a and end at b at intervals of 1 and include a and b, and {x, y, ...} represents indices corresponding to pilot subcarriers included in the RU, and a number in {} indicates a quantity of pilot subcarriers.

Table 1

| RU type | RU index, subcarrier index range, and pilot subcarrier index | | | | |
|---|---|---|---|---|---|
| 26-tone RU 2 pilots | RU 1 [-121:-96] {-116, -102} | RU 2 [-95:-70] {-90, -76} | RU 3 [-68:-43] {-62, -48} | RU 4 [-42:-17] {-36, -22} | RU 5 [-16:-4, 4:16] {-10, 10} |
| | RU 6 [17:42] {22, 36} | RU 7 [43:68] {48, 62} | RU 8 [70:95] {76, 90} | RU 9 [96:121] {102, 116} | |
| 52-tone RU 4 pilots | RU 1 [-121:-70] {-116, -102, -90, -76} | RU 2 [-68:-17] {-62, -48, □36, -22} | RU 3 [17:68] {22, 36, 48, 62} | RU 4 [70:121] {76, 90, 102, 116} | |
| 106-tone RU 4 pilots | RU 1 [-122:-17] {-116, -90, -48, -22} | | RU 2 [17:122] {22, 48, 90, 116} | | |
| 242-tone RU 8 pilots | RU 1 [-122:-2, 2:122]{-116, -90, -48, -22, 22, 48, 90, 116} | | | | |

It can be learned from Table 1 that a 26-tone RU has 24 data subcarriers and two pilot subcarriers in total, a 52-tone RU has 48 data subcarriers and four pilot subcarriers in total, a 106-tone RU has 102 data subcarriers and four pilot subcarriers in total, and a 242-tone RU has 234 data subcarriers and eight pilot subcarriers in total. It may be understood that Table 1 shows the index values of the RUs in the 20 MHz bandwidth, and the subcarrier index range and the indices of the pilot subcarriers corresponding to each RU. In another representation form, Table 1 may also be divided into two or more tables. For example, the table is divided into two tables. One table provides the index values of the RUs in the 20 MHz bandwidth and the subcarrier index range corresponding to each RU, and the other table provides the indices of the pilot subcarriers of the RUs in the 20 MHz bandwidth. The two tables can be clearly obtained from Table 1, and are not shown one by one herein. Similarly, Table 2, Table 3, and the like below may be divided and deformed similarly. Details are not described below.

When a bandwidth is 40 MHz, the 40 MHz bandwidth includes 512 subcarriers in total, and the subcarriers are numbered in ascending order of subcarrier frequencies, and subcarrier indices are -256 to 255. Table 2 shows index values of RUs in the 40 MHz bandwidth, and a subcarrier index range and indices of pilot subcarriers corresponding to each RU.

Table 2

| RU type | RU index, subcarrier range, and pilot subcarrier location | | | | |
|---|---|---|---|---|---|
| 26-tone RU 2 pilots | RU 1<br>[-243:-218]<br>{-238, -224} | RU 2<br>[-217:-192]<br>{-212, -198} | RU 3<br>[-189:-164]<br>{-184, -170} | RU 4<br>[-163:-138]<br>{-158, -144} | RU 5<br>[-136:-111]<br>{-130, -116} |
| | RU 6<br>[-109:-84]<br>{-104, -90} | RU 7<br>[-83:-58]<br>{-78, -64} | RU 8<br>[-55:-30]<br>{-50, -36} | RU 9<br>[-29:-4]<br>{-24, -10} | |
| | RU 10<br>[4:29]<br>{10, 24} | RU 11<br>[30:55]<br>{36, 50} | RU 12<br>[58:83]<br>{64, 78} | RU 13<br>[84:109]<br>{90, 104} | RU 14<br>[111:136]<br>{116, 130} |
| | RU 15<br>[138:163]<br>{144, 158} | RU 16<br>[164:189]<br>{170, 184} | RU 17<br>[192:217]<br>{198, 212} | RU 18<br>[218:243]<br>{224, 238} | |
| 52-tone RU 4 pilots | RU 1<br>[-243:-192]<br>{-238, -224, -212, -198} | RU 2<br>[-189:-138]<br>{-184, -170, -158, -144} | RU 3<br>[-109:-58]<br>{-104, -90, - 78, -64} | RU 4<br>[-55:-4]<br>{-50, -36, - 24, -10} | |
| | RU 5<br>[4:55]<br>{10, 24, 36, 50} | RU 6<br>[58:109]<br>{64, 78, 90, 104} | RU 7<br>[138:189]<br>{144, 158, 170, 184} | RU 8<br>[192:243]<br>{198, 212, 224, 238} | |
| 106-tone RU 4 pilots | RU 1<br>[-243:-138]<br>{-238, -212, -170, -144} | RU 2<br>[-109:-4]<br>{-104, -78, - 36, -10} | RU 3<br>[4:109]<br>{10, 36, 78, 104} | RU 4<br>[138:243]<br>{144, 170, 212, 238} | |
| 242-tone RU 8 pilots | RU 1<br>[-244:-3]<br>{-238, -212, -170, -144, -104, -78, -36, -10} | | RU 2<br>[3:244]<br>{10, 36, 78, 104, 144, 170, 212, 238} | | |
| 484-tone RU 16 pilots | RU 1<br>[-244:-3, 3:244]<br>{-238, -212, -170, -144, -104, -78, -36, -10, 10, 36, 78, 104, 144, 170, 212, 238} | | | | |

It can be learned from Table 2 that the 484-tone RU has 468 data subcarriers and 16 pilot subcarriers in total.

When a bandwidth is 80 MHz, the 80 MHz bandwidth includes 1024 subcarriers in total, and the subcarriers are numbered in ascending order of subcarrier frequencies, and subcarrier indices are -512 to 511. Table 3 shows index values of RUs in the 80 MHz bandwidth, and a subcarrier index range and indices of pilot subcarriers corresponding to each RU.

Table 3

| RU type | RU index, subcarrier range, and pilot subcarrier location | | | | |
|---|---|---|---|---|---|
| 26-tone RU 2 pilots | RU 1<br>[-499:-474]<br>{-494, -480} | RU 2<br>[-473:-448]<br>{-468, -454} | RU 3<br>[-445:-420]<br>{-440, - 426} | RU 4<br>[-419:-394]<br>{-414, - 400} | RU 5<br>[-392:-367]<br>{-386, - 372} |
| | RU 6<br>[-365:-340]<br>{-360, -346} | RU 7<br>[-339:-314]<br>{-334, -320} | RU 8<br>[-311:-286]<br>{-306, - 292} | RU 9<br>[-285:-260]<br>{-280, - 266} | |
| | RU 10<br>[-252:-227]<br>{-246, -232} | RU 11<br>[-226:-201]<br>{-220, -206} | RU 12<br>[-198:-173]<br>{-192, - 178} | RU 13<br>[-172:-147]<br>{-166, - 152} | RU 14<br>[-145:-120]<br>{-140, - 126} |
| | RU 15<br>[-118:-93]<br>{-112,-98} | RU 16<br>[-92:-67]<br>{-86, -72} | RU 17<br>[-64:-39]<br>{-58, -44} | RU 18<br>[-38:-13]<br>{-2, -18} | RU 19<br>[Undefined] |
| | RU 20<br>[13:38]<br>{18, 32} | RU 21<br>[39:64]<br>{44, 58} | RU 22<br>[67:92]<br>{72, 86} | RU 23<br>[93:118]<br>{98, 112} | RU 24<br>[120:145]<br>{126, 140} |
| | RU 25<br>[147:172]<br>{152, 166} | RU 26<br>[173:198]<br>{178, 192} | RU 27<br>[201:226]<br>{206, 220} | RU 28<br>[227:252]<br>{232, 246} | |
| | RU 29<br>[260:285]<br>{266, 280} | RU 30<br>[286:311]<br>{292, 306} | RU 31<br>[314:339]<br>{320, 334} | RU 32<br>[340:365]<br>{346, 360} | RU 33<br>[367:392]<br>{372, 386} |
| | RU 34<br>[394:419]<br>{400, 414} | RU 35<br>[420:445]<br>{426, 440} | RU 36<br>[448:473]<br>{454, 468} | RU 37<br>[474:499]<br>{480, 494} | |
| 52-tone RU 4 pilots | RU 1<br>[-499:-448]<br>{-494, -480, -468, -454} | RU 2<br>[-445:-394]<br>{-440, -426, -414, -400 | RU 3<br>[-365:-314]<br>{-360, -346, -334, -320} | RU 4<br>[-311:-260]<br>{-306, -292, -280, -266} | |
| | RU 5<br>[-252:-201]<br>{-246, -232, -220, -206} | RU 6<br>[-198:-147]<br>{-192, -178, -166, -152} | RU 7<br>[-118:-67]<br>{-112, -98, -86, -72} | RU 8<br>[-64:-13]<br>{-58, -44, - 32, -18} | |
| | RU 9<br>[13:64]<br>{18, 32, 44, 58} | RU 10<br>[67:118]<br>{72, 86, 98, 112} | RU 11<br>[147:198]<br>{152, 166, 178, 192} | RU 12<br>[201:252]<br>{206, 220, 232, 246} | |
| | RU 13<br>[260:311]<br>{266, 280, 292, 306} | RU 14<br>[314:365]<br>{320, 334, 346, 360} | RU 15<br>[394:445]<br>{400, 414, 426, 440} | RU 16<br>[448:499]<br>{454, 468, 480, 494} | |

(continued)

| RU type | RU index, subcarrier range, and pilot subcarrier location | | | | |
|---|---|---|---|---|---|
| 106-tone RU 4 pilots | RU 1 [-499:-394] {-494, -468, -426, -400} | RU 2 [-365:-260] {-360, -334, -292, -266} | RU 3 [-252:-147] {-246, -220, -178, -152} | RU 4 [-118:-13] {-112, -86, -44, -18} | |
| | RU 5 [13:118] {18, 44, 86, 112} | RU 6 [147:252] {152, 178, 220, 246} | RU 7 [260:365] {266, 292, 334, 360} | RU 8 [394:499] {400, 426, 468, 494} | |
| 242-tone RU 8 pilots | RU 1 [-500:-259] {-494, -468, -426, -400, -360, -334, -292, -266} | | RU 2 [-253:-12] {-246, -220, -178, -152, -112, -56, -44, -18} | | |
| | RU 3 [12:253] {18, 44, 86, 112, 152, 178, 220, 246} | | RU 4 [259:500] {266, 292, 334, 360, 400, 426, 468, 494} | | |
| 484-tone RU 16 pilots | RU 1 [-500:-259, -253:-12] {-494, -468, -426, -400, -360, -334, -392, -266, -246, - 220, -178, -152, -112, -86, -44, -18} | | | | |
| | RU 2 [12:253, 259:500] {18, 44, 86, 112, 152, 178, 220, 246, 266, 292, 334, 360, 400, 426, 468, 494} | | | | |
| 996-tone RU 16 pilots | RU 1 [-500:-3, 3:500] {-468, -400, -334, -266, -220, -152, -86, -18, 18, 86, 152, 220, 266, 334, 400, 468} | | | | |

It can be learned from Table 3 that the 996-tone RU has 980 data subcarriers and 16 pilot subcarriers in total.

For a subcarrier index range and indices of pilot subcarriers of each RU included in a 160 MHz bandwidth or a larger bandwidth, refer to definitions in an existing standard or protocol. For example, the subcarrier index range and the indices of the pilot subcarriers of each RU included in the 160 MHz bandwidth or the larger bandwidth are determined based on the subcarrier index range and the indices of the pilot subcarriers of each RU included in the 80 MHz bandwidth. Specifically, the subcarrier index range of each RU included in the 160 MHz bandwidth is obtained by shifting, based on an offset value, the subcarrier index range of each RU included in the 80 MHz bandwidth, and indices of pilot subcarriers of each RU included in the 160 MHz bandwidth are obtained by shifting, based on an offset value, the indices of the pilot subcarriers of each RU included in 80 MHz. The offset value includes $\pm 512$ (512 is 1/2 of a quantity of subcarriers included in the 80 MHz bandwidth). A subcarrier index range of each RU included in a 320 MHz bandwidth is obtained by shifting, based on an offset value, the subcarrier index range of each RU included in the 160 MHz bandwidth, and indices of pilot subcarriers of each RU included in the 320 MHz bandwidth are obtained by shifting, based on an offset value, the indices of the pilot subcarriers of each RU included in 160 MHz. The offset value includes $\pm 1024$ (1024 is 1/2 of a quantity of subcarriers included in the 160 MHz bandwidth). By analogy, a subcarrier index range and indices of pilot subcarriers of each RU included in a larger bandwidth can be obtained.

106-tone RUs included in the 160 MHz bandwidth are used as an example. Subcarrier index ranges of a 106-tone RU 1 to a 106-tone RU 8 included in the 160 MHz bandwidth are respectively obtained by subtracting 512 from subcarrier index ranges of a 106-tone RU 1 to a 106-tone RU 8 included in an 80 MHz bandwidth. Indices of pilot subcarriers of the 106-tone RU 1 to the 106-tone RU 8 included in the 160 MHz bandwidth are respectively obtained by subtracting 512 from indices of pilot subcarriers of the 106-tone RU 1 to the 106-tone RU 8 included in the 80 MHz bandwidth. Subcarrier index ranges of a 106-tone RU 9 to a 106-tone RU 16 included in the 160 MHz bandwidth are respectively obtained by adding 512 to the subcarrier index ranges of the 106-tone RU 1 to the 106-tone RU 8 included in the 80 MHz bandwidth. Indices of pilot subcarriers of the 106-tone RU 9 to the 106-tone RU 16 included in the 160 MHz bandwidth are respectively obtained by adding 512 to the indices of the pilot subcarriers of the 106-tone RU 1 to the 106-tone RU 8 included in the 80 MHz bandwidth. For example, the subcarrier index range of the 106-tone RU 1 included in the 80 MHz bandwidth is [-499:-394] from which 512 is subtracted to obtain the subcarrier index range of the 106-tone RU 1 included in the 160 MHz bandwidth: [-1011:-906]; and an index range of the pilot subcarriers of the 106-tone RU 1 included in the 80 MHz bandwidth is {-494, -468, -426, -400} from which 512 is subtracted to obtain a subcarrier index range of the 106-tone RU 1 included in the 160 MHz bandwidth: {-1006, -980, -938, -912}. For brevity, the following does not show the subcarrier index range and the indices of the pilot subcarriers of each RU included in the 160 MHz bandwidth or the larger bandwidth.

3. Multiple resource units (multi-RU, MRU): The MRU includes a plurality of consecutive or inconsecutive RUs. In other words, the MRU is an RU including a plurality of RUs.

For example, a plurality MRUs are introduced in the 802.11be protocol: One 52-tone RU and one 26-tone RU form a 52+26-tone MRU, one 106-tone RU and one 26-tone RU form a 106+26-tone MRU, one 484-tone RU and one 242-tone RU form a 484+242-tone MRU, one 996-tone RU and one 484-tone RU form a 996+484-tone MRU, one 242-tone RU, one 484-tone RU, and one 996-tone RU form a 242+484+996-tone MRU, two 996-tone RUs and one 484-tone RU form a 2*996+484-tone MRU, three 996-tone RUs form a 3*996-tone MRU, three 996-tone RUs and one 484-tone RU form a 3*996+484-tone MRU, and so on.

Subcarrier index ranges of different MRUs included in different bandwidths are obtained by splicing subcarrier index ranges of RUs that form the MRUs, and indices of pilot subcarriers of the MRU are indices of pilot subcarriers of RUs that forms the MRU. With reference to Table 4 below, the following uses an MRU included in a 20 MHz bandwidth as an example to describe a manner of determining a subcarrier index range and indices of pilot subcarriers of the MRU.

Table 4 shows types, indices, and combination forms of different MRUs included in the 20 MHz bandwidth.

Table 4

| MRU type (type) | MRU index (index) | MRU combination (combination) |
|---|---|---|
| 52+26-tone MRU | MRU 1 | 52-tone RU 2+26-tone RU 2 |
| | MRU 2 | 52-tone RU 2+26-tone RU 5 |
| | MRU 3 | 52-tone RU 3+26-tone RU 8 |
| 106+26-tone RU | MRU 1 | 106-tone RU 1+26-tone RU 5 |
| | MRU 2 | 106-tone RU 2+26-tone RU 2 |

A 52+26-tone MRU 1 is used as an example. The 52+25-tone MRU 1 includes a 52-tone RU 2 and a 26-tone RU 2. It can be learned from Table 1 that subcarrier index ranges of the 52-tone RU 2 and the 26-tone RU 2 are respectively [-95:-70] and [-68:-17]. The subcarrier index ranges of the 52-tone RU 2 and the 26-tone RU 2 are spliced to obtain a subcarrier index range of the 52+26-tone MRU 1: [-95:-70, -68:-17]. It can be learned from Table 1 that indices of pilot subcarriers of the 52-tone RU 2 and the 26-tone RU 2 are respectively {-90, -76} and {-62, -48, -36, -22}. Therefore, indices of pilot subcarriers of the 52+26-tone MRU 1 may be obtained: {90, -76, -62, -48, -36, -22}.

Currently, in WLAN low-frequency communication, a PPDU may be transmitted by using an OFDM technology.

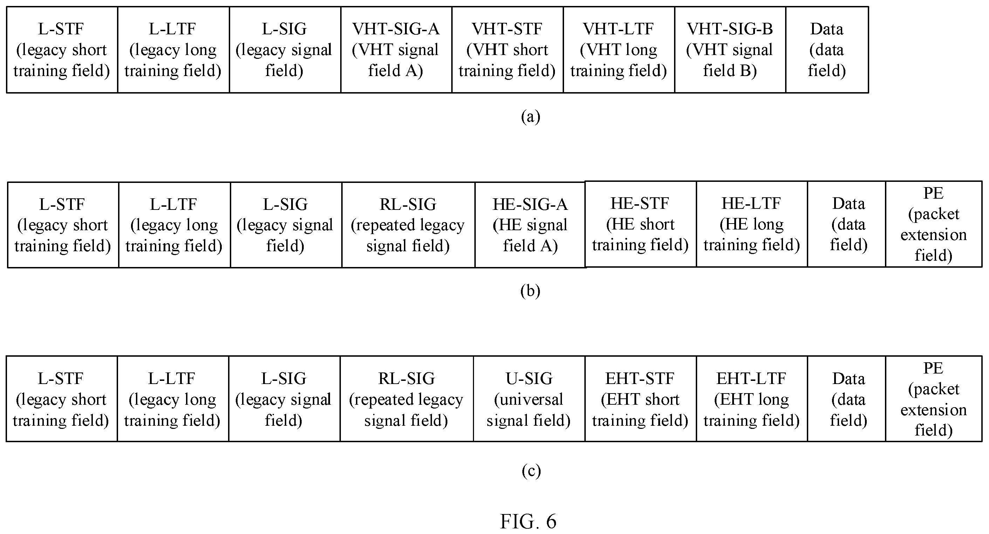

For example, FIG. 6 shows PPDU formats in several low-frequency communication protocols. (a), (b), and (c) in FIG. 6 respectively show a format of a PPDU in the 802.11ac (that is, VHT) protocol, a format of a single-user (single-user, SU) PPDU in the 802.11ax (HE) protocol, and a format of a multi-user (multi-user, MU) PPDU in the 802.11be (EHT) protocol.

As shown in (a) in FIG. 6, a VHT PPDU includes a legacy short training field (legacy short training field, L-STF), a legacy long training field (legacy long training field, L-LTF), a legacy signal field (legacy signal field, L-SIG), a VHT signal field A (VHT signal A field, VHT-SIG-A), a VHT short training field (VHT short training field, VHT-STF), a VHT long training field (VHT long training field, VHT-LTF), a VHT signal field B (VHT signal B field, VHT-SIG-B), and a data (Data) field.

As shown in (b) in FIG. 6, an HE SU PPDU includes an L-STF, an L-LTF, an L-SIG, a repeated legacy signal field (repeated legacy signal field, RL-SIG), an HE signal field A (VHT signal A field, HE-SIG-A), an HE short training field (HE short training field, HE-STF), an HE long training field (HE long training field, HE-LTF), a data (Data) field, and a packet extension (package extension, PE) field.

As shown in (c) in FIG. 6, an EHT MU PPDU includes an L-STF, an L-LTF, an L-SIG, an RL-SIG, a universal signal field (universal signal field, U-SIG), an EHT short training field (EHT short training field, EHT-STF), an EHT long training field (EHT long training field, EHT-LTF), a data (Data) field, and a packet extension (package extension, PE) field.

It should be understood that FIG. 6 is merely an example. PPDU formats in other low-frequency communication protocols are basically similar to that in FIG. 6, and a PPDU basically includes a legacy preamble (including an L-STF, an L-LTF, and an L-SIG), a new-generation preamble (for example, a U-SIG, an EHT-STF, or an EHT-LTF), a data (Data) field, and the like.

In high-frequency communication, the OFDM technology is not used at the beginning of a PPDU. Specifically, in high-frequency communication, a plurality of fields in a preamble are first modulated in a single carrier (single carrier, SC) mode, and only a field after the preamble is transmitted by using the OFDM technology. This achieves advantages of a low peak-to-average power ratio (peak-to-average power ratio, PAPR), phase noise suppression, and the like. However, a transmission mode in which both SC and OFDM are used in a PPDU also has some disadvantages. For example, modulation schemes in the PPDU are not unified or are incompatible with a format of a low-frequency PPDU. This causes extra complexity to a device that implements both a low frequency and a high frequency.

Therefore, a high-frequency PPDU may be transmitted by using a low-frequency PPDU-based "upclocking (upclocking)" version.

The "upclocking" is described below by using the L-STF in the VHT PPDU as an example.

In an example, a sequence format of the L-STF of the VHT PPDU in frequency domain may be shown in the following formula:

$$
\begin{aligned}
s_{-26,26} = \sqrt{\frac{1}{2}} \{ & 0,0, \mathbf{1+j}, 0,0,0, \mathbf{-1-j}, 0,0,0, \mathbf{1+j}, 0,0,0, \mathbf{-1-j}, 0,0,0, \mathbf{-1-j}, 0,0,0, \mathbf{1} \\
& \mathbf{+j}, 0,0,0, \mathbf{0}, 0,0,0, \mathbf{-1-j}, 0,0,0, \mathbf{-1-j}, 0,0,0, \mathbf{1+j}, 0,0,0, \mathbf{1+j}, 0,0,0, \mathbf{1} \\
& \mathbf{+j}, 0,0,0, \mathbf{1+j}, 0,0 \}
\end{aligned}
$$

Herein, $s_{-26,26}$ represents a sequence of subcarriers from -26 to 26, and each value in {} corresponds to one subcarrier in frequency domain.

In OFDM transmission, although a quantity of subcarriers of the L-STF is 64, actually, information is usually transmitted only on some subcarriers at a conventional low frequency. Therefore, subcarriers shown in the foregoing formula are from -26 to 26, and eleven 0s in total are not provided on left and right sides of the $s_{-26,26}$ sequence. Because 64 subcarriers are used and each subcarrier corresponds to 0.05 microsecond, a periodicity corresponding to the 64 subcarriers is 3.2 microseconds. Based on a relationship that a periodicity and a subcarrier spacing are reciprocals of each other, a subcarrier spacing corresponding to the foregoing sequence is 312.5 kHz (namely, 1/3.2 microsecond).

The "upclocking" means shortening a time interval between adjacent subcarriers. When a quantity of subcarriers used for sending remains unchanged, a periodicity corresponding to a same quantity of subcarriers is shortened. Because the periodicity is in a reciprocal relationship with a subcarrier spacing, the subcarrier spacing increases.

For example, for a VHT PPDU (as shown in (a) in FIG. 6), subcarrier spacings of all fields of the PPDU are 312.5 kHz. When 4x upclocking is used, a subcarrier spacing of a VHT PPDU of a 4x upclocking version (namely, a 4x 802.11ac PPDU) is 1.25 MHz (namely, 312.5 kHz × 4). When 8x upclocking is used, a subcarrier spacing of a VHT PPDU of an 8x upclocking version (namely, an 8x 802.11ac PPDU) is 2.5 MHz (namely, 312.5 kHz × 8).

For another example, for an EHT MU PPDU (as shown in (c) in FIG. 6), subcarrier spacings of all fields (including an L-STF field, an L-LTF field, an L-SIG field, an RL-SIG field, and a U-SIG field) before an EHT-STF are 312.5 kHz, subcarrier spacings of the EHT-STF and subsequent fields (including an EHT-STF field, an EHT-LTF field, a data field, and a PE field) change to 78.125 kHz, and each 20 MHz includes 256 subcarriers. When 16x upclocking is used, in an EHT MU PPDU of a 16x upclocking version (namely, a 16x 802.11be PPDU), a subcarrier spacing of a field before an EHT-STF is 5 MHz (namely, 312.5 kHz × 16), and subcarrier spacings of the EHT-STF and a subsequent field, for example, a data field, are 1.25 MHz (namely, 78.125 kHz × 16).

Table 5 shows parameters of the 4x 802.11ac PPDU, the 8x 802.11ac PPDU, and the 16x 802.11be PPDU. The parameters include: a bandwidth available for transmission, a subcarrier spacing, a discrete Fourier transform (discrete fourier transform, DFT)/inverse discrete Fourier transform (inverse discrete fourier transform, IDFT) periodicity, and an IDFT/DFT size. The IDFT/DFT size may also be referred to as a quantity of points/a quantity of subcarriers of IDFT/DFT. For example, the IDFT size being 64 indicates 64-point/64-subcarrier IDFT.

Table 5

|  | 4x 802.11ac | 8x 802.11ac | 16x 802.11be |
|---|---|---|---|
| Bandwidth | 80/160/320/640 MHz | 160/320/640/1280 MHz | 320/640/1280/2560/5120 MHz |
| Subcarrier spacing | 1.25 MHz (=0.3125*4) | 2.5 MHz (=0.3125*8) | 1.25 MHz (=0.078125*16) (For an 802.11be part) |
| IDFT/DFT periodicity | 800 ns | 400 ns | 800 ns |
| IDFT/DFT size | 64/128/256/512 | 64/128/256/512 | 256/512/1024/2048/4096 |

It can be learned from the foregoing descriptions that, in a current PPDU of an "upclocking" version, a unified "upclocking" mode is used. To be specific, "upclocking" of a same multiple is used for different parts of a PPDU. In addition, different parts of the PPDU of the "upclocking" version may have different subcarrier spacings in a same bandwidth.

Currently, a ratio between a subcarrier spacing of a data part of a PPDU and a subcarrier spacing of a preamble signaling part of the PPDU before an upclocking operation is the same as that after the upclocking operation. In other words, the upclocking operation is also an operation performed on the entire PPDU. For example, the subcarrier spacing of the data part of the PPDU and the subcarrier spacing of the preamble signaling part of the PPDU are both amplified according to a same amplification multiple. Requirements of different devices cannot be met because the ratio between the subcarrier spacing of the data part of the PPDU and the subcarrier spacing of the preamble signaling part of the PPDU is relatively fixed. For example, a device with relatively good performance requires a relatively small subcarrier spacing of the data part to improve transmission efficiency, and a device with relatively poor performance requires a relatively large subcarrier spacing of the data part to improve transmission robustness. Therefore, how to meet requirements of different devices for a subcarrier spacing of a data part is an urgent technical problem to be resolved currently.

In view of this, this application provides a communication method and a communication apparatus, to meet requirements of different devices for a subcarrier spacing of a data part.

For ease of understanding and description, the following describes the communication method in this application by using interaction between a first device and a second device as an example. However, this should not constitute any limitation on an execution entity of the communication method in this application. For example, the first device shown below may be replaced with a component (such as a circuit, a chip, or a chip system) configured in the first device, and the second device may be replaced with a component (such as a circuit, a chip, or a chip system) configured in the second device. The first device may be an AP or a STA, and the second device may be an AP or a STA.

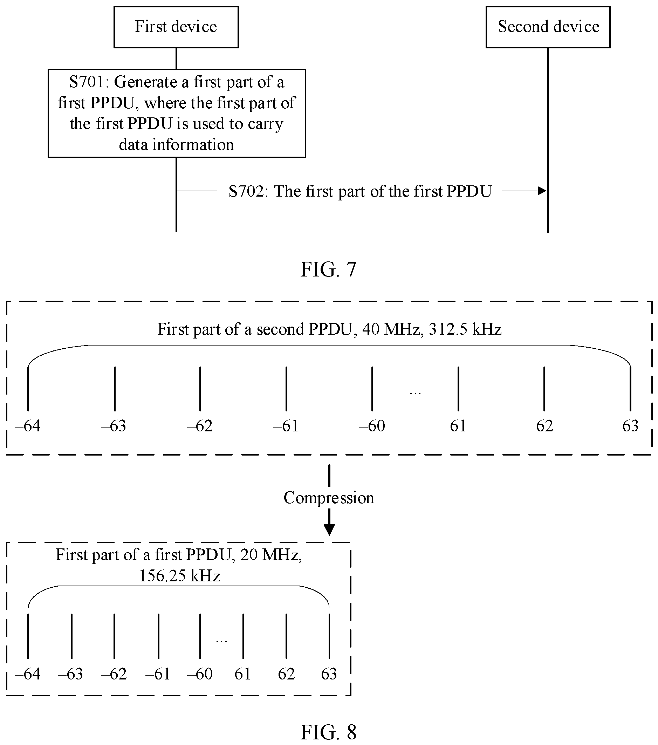

FIG. 7 is an interaction flowchart of a communication method according to an embodiment of this application. As shown in FIG. 7, the method includes the following steps.

S701: A first device generates a first part of a first PPDU, where the first part of the first PPDU is used to carry data information.

The first part of the first PPDU may be understood as a data part of the first PPDU, and is used to carry the data information. A subcarrier configuration of the first part of the first PPDU in a first bandwidth is generated based on a subcarrier configuration of a first part (also used to carry data information) of a second PPDU in a second bandwidth. In other words, the subcarrier configuration of the first part of the first PPDU in the first bandwidth may be diversified. For example, the first part of the first PPDU supports a plurality of subcarrier configurations in the first bandwidth, and the plurality of subcarrier configurations are the same as or partially the same as the subcarrier configuration of the first part of the second PPDU in the corresponding bandwidth.

The "subcarrier configuration" may include one or more of: a quantity of subcarriers, a quantity of data subcarriers, a quantity of pilot subcarriers, indices of data subcarriers, indices of pilot subcarriers, a null subcarrier, a guard subcarrier, and the like. This is not limited herein.

The second PPDU may be any one of: an EHT PPDU, an HE PPDU, a VHT PPDU, and a UHR PPDU. In other words, this application supports a new design of the subcarrier configuration of the data part of the first PPDU based on the second PPDU defined in an existing standard, to meet requirements of different devices. The first PPDU is a PPDU before upclocking.

In a possible implementation, indices of data subcarriers of the first part of the first PPDU in the first bandwidth are the same as or partially the same as indices of data subcarriers of the first part of the second PPDU in the second bandwidth, indices of pilot subcarriers of the first part of the first PPDU in the first bandwidth are the same as or partially the same as indices of pilot subcarriers of the first part of the second PPDU in the second bandwidth, a subcarrier spacing of the first part of the first PPDU in the first bandwidth is less than a subcarrier spacing of the first part of the second PPDU in the second bandwidth, and the second bandwidth is greater than the first bandwidth. For descriptions of the first bandwidth and the second bandwidth, refer to Table 6 and FIG. 8 to FIG. 10. Content shown in Table 6 is merely used as an example for understanding, and is not used as final limitation.

Table 6

| First bandwidth corresponding to the first part of the first PPDU | Second bandwidth corresponding to the first part of the second PPDU |
| --- | --- |
| 20 MHz | 40 MHz |
| 20 MHz | 80 MHz |
| 20 MHz | 160 MHz |
| 40 MHz | 80 MHz |

(continued)

| First bandwidth corresponding to the first part of the first PPDU | Second bandwidth corresponding to the first part of the second PPDU |
| --- | --- |
| 40 MHz | 160 MHz |
| 80 MHz | 160 MHz |

As shown in Table 6, for example, the first bandwidth is 20 MHz, and the second bandwidth is 40 MHz; the first bandwidth is 20 MHz, and the second bandwidth is 80 MHz; the first bandwidth is 20 MHz, and the second bandwidth is 160 MHz; the first bandwidth is 40 MHz, and the second bandwidth is 80 MHz; the first bandwidth is 40 MHz, and the second bandwidth is 160 MHz; or the first bandwidth is 80 MHz, and the second bandwidth is 160 MHz.

For example, the first bandwidth is 20 MHz. The first part of the first PPDU in the 20 MHz bandwidth may support subcarrier configurations of the first part of the second PPDU in a 40 MHz bandwidth, an 80 MHz bandwidth, and a 160 MHz bandwidth. For example, the first part of the first PPDU in the 20 MHz bandwidth may support a quantity of subcarriers of the first part of the second PPDU in the 40 MHz bandwidth, and the first part of the first PPDU in the 20 MHz bandwidth may support a quantity of subcarriers of the first part of the second PPDU in the 80 MHz bandwidth, and the first part of the first PPDU in the 20 MHz bandwidth may support a quantity of subcarriers of the first part of the second PPDU in the 160 MHz bandwidth. A same quantity of subcarriers have different subcarrier spacings in different bandwidths. In this case, a plurality of subcarrier spacings of the first part of the first PPDU in the first bandwidth can be constructed, so that a proportional relationship between a subcarrier spacing of a preamble signaling part of the first PPDU and a subcarrier spacing of a data part of the first PPDU can be adjusted, thereby meeting requirements of different devices.

For example, the second PPDU is a VHT PPDU. For a 20 MHz bandwidth, a data part of the VHT PPDU supports 64 subcarriers, and a subcarrier spacing is 312.5 kHz. For a 40 MHz bandwidth, a data part of the VHT PPDU supports 128 subcarriers, and a subcarrier spacing is 312.5 kHz. For an 80 MHz bandwidth, a data part of the VHT PPDU supports 256 subcarriers, and a subcarrier spacing is 312.5 kHz. Therefore, by reusing subcarrier configurations of the VHT PPDU respectively in the 40 MHz bandwidth and the 80 MHz bandwidth, it can be supported in this application that the first part of the first PPDU may separately support configurations such as 128 subcarriers, 256 subcarriers, and another quantity of subcarriers in the 20 MHz bandwidth, so that the proportional relationship between the subcarrier spacing of the preamble signaling part of the first PPDU and the subcarrier spacing of the data part of the first PPDU can be adjusted, thereby meeting requirements of different devices.

FIG. 8 is a diagram of a relationship between a first bandwidth and a second bandwidth. As shown in FIG. 8, the second bandwidth is 40 MHz, the subcarrier spacing of the first part of the second PPDU in the second bandwidth is 312.5 kHz, and the first part of the second PPDU corresponds to 128 consecutive subcarriers in the 40 MHz bandwidth. The subcarriers are numbered in ascending order of subcarrier frequencies. Subcarrier index values are -64, -63, ..., 0, ..., 62, and 63, that is, starting from -64 and ending at 63 at intervals of 1. By compressing 128 subcarriers supported by the first part of the second PPDU in the 40 MHz bandwidth, the 128 subcarriers can be used for a 20 MHz bandwidth, and the subcarrier spacing is halved, that is, 156.25 kHz.

In a possible implementation, indices of subcarriers of the first part of the first PPDU in the 20 MHz bandwidth include:

$$K_{SP} = \{-53, -25, -11, 11, 25, 53\}, \text{and } K_{SD} = \{-58, \dots, 58\} - K_{SP} - \{-1, 0, 1\}\quad,$$

where $K_{SP}$ indicates an index set of pilot subcarriers, $K_{SD}$ indicates an index set of data subcarriers, and $K_{SD}$ includes 52 indices. In this way, the subcarrier configuration of the first part of the first PPDU in the first bandwidth can be configured based on the subcarrier indices.

In addition to the data subcarriers and the pilot subcarriers, the first bandwidth may further include a null subcarrier and a guard subcarrier. Therefore, the index sets reflect only the indices of the data subcarriers and the indices of the pilot subcarriers of the first part of the first PPDU in the first bandwidth, and do not reflect an index of the null subcarrier and an index of the guard subcarrier.

To support the first part of the first PPDU in also supporting 128 subcarriers in the 20 MHz bandwidth, this application supports a subcarrier configuration of the first part of the second PPDU in the 40 MHz bandwidth in being replicated to the 20 MHz bandwidth supported by the first part of the first PPDU and supports a subcarrier spacing of the 40 MHz bandwidth in being correspondingly reduced, so that the first part of the first PPDU in the 20 MHz bandwidth can also support a quantity of subcarriers supported by the first part of the second PPDU in the 40 MHz bandwidth.

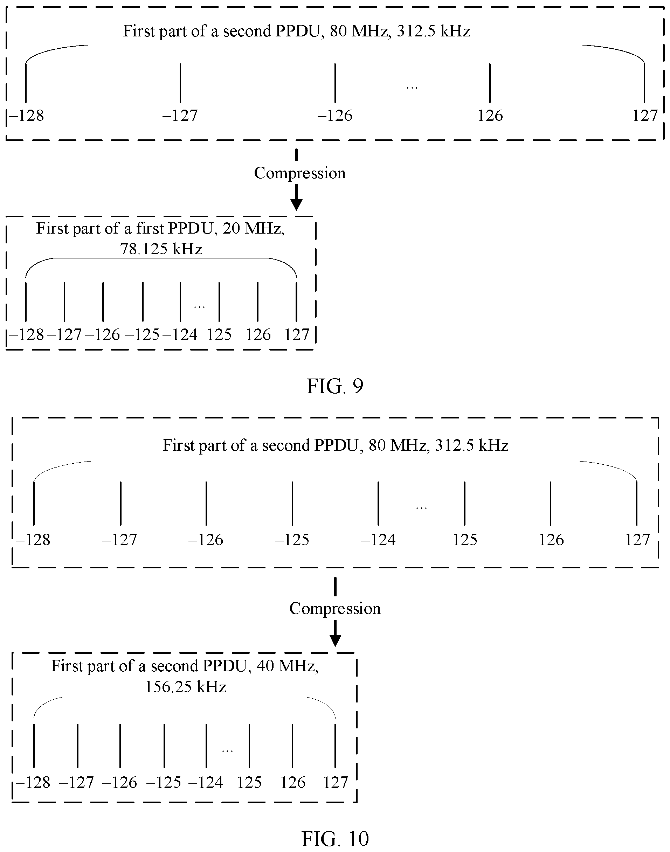

FIG. 9 is a diagram of another relationship between a first bandwidth and a second bandwidth. As shown in FIG. 9, the second bandwidth is 80 MHz, the subcarrier spacing of the first part of the second PPDU in the second bandwidth is 312.5 kHz, and the first part of the second PPDU corresponds to 256 consecutive subcarriers in the 80 MHz bandwidth. The subcarriers are numbered in ascending order of subcarrier frequencies. Subcarrier index values are -128, -127, ..., 0, ..., 126, and 127. By compressing 256 subcarriers supported by the first part of the second PPDU in the 80 MHz bandwidth, the 256 subcarriers can be used for a 20 MHz bandwidth, and the subcarrier spacing is quartered, that is, 78.125 kHz.

In a possible implementation, indices of subcarriers of the first part of the first PPDU in the 20 MHz bandwidth include:

$K_{SP} = \{-103, -75, -39, -11, 11, 39, 75, 103\}$, and $K_{SD} = \{-122, ..., 122\} - K_{SP} - \{-1, 0, 1\}$, where $K_{SD}$ includes 108 indices. In this way, the subcarrier configuration of the first part of the first PPDU in the first bandwidth can be configured based on the subcarrier indices.

To support the first part of the first PPDU in supporting 256 subcarriers in the 20 MHz bandwidth, this application supports a subcarrier configuration of the first part of the second PPDU in 80 MHz in being replicated to the 20 MHz bandwidth supported by the first part of the first PPDU and supports a subcarrier spacing of the 80 MHz bandwidth in being correspondingly reduced, so that the first part of the first PPDU in the 20 MHz bandwidth can also support a quantity of subcarriers supported by the first part of the second PPDU in the 80 MHz bandwidth.

FIG. 10 is a diagram of still another relationship between a first bandwidth and a second bandwidth. As shown in FIG. 10, the second bandwidth is 80 MHz, the subcarrier spacing of the first part of the second PPDU in the second bandwidth is 312.5 kHz, and the first part of the second PPDU corresponds to 256 consecutive subcarriers in the 80 MHz bandwidth. The subcarriers are numbered in ascending order of subcarrier frequencies. Subcarrier index values are -128, -127, ..., 0, ..., 126, and 127. By compressing 256 subcarriers supported by the first part of the second PPDU in the 80 MHz bandwidth, the 256 subcarriers can be used for a 40 MHz bandwidth, and the subcarrier spacing is halved, that is, 156.25 kHz.

To support the first part of the first PPDU in supporting 256 subcarriers in the 40 MHz bandwidth, this application supports a subcarrier configuration of the first part of the second PPDU in 80 MHz in being replicated to the 40 MHz bandwidth supported by the first part of the first PPDU and supports a subcarrier spacing of the 80 MHz bandwidth in being correspondingly reduced, so that the first part of the first PPDU in the 40 MHz bandwidth can also support a quantity of subcarriers supported by the first part of the second PPDU in the 80 MHz bandwidth.

It should be noted that FIG. 8 is described by using an example in which the first bandwidth is 20 MHz and the second bandwidth is 40 MHz, FIG. 9 is described by using an example in which the first bandwidth is 20 MHz and the second bandwidth is 80 MHz, and FIG. 10 is described by using an example in which the first bandwidth is 40 MHz and the second bandwidth is 80 MHz. However, the foregoing content is merely used as an example for description, and is not used as final limitation. For descriptions of the first bandwidth being 40 MHz and the second bandwidth being 160 MHz, refer to the foregoing descriptions. Alternatively, for descriptions of the first bandwidth being 80 MHz and the second bandwidth being 320 MHz, refer to the foregoing descriptions. Details are not described below again.

In a possible implementation, the first PPDU may further include a second part, the second part of the first PPDU is used to carry signaling information, and the second part of the first PPDU is located in a preamble signaling part. The second part of the first PPDU may be understood as a general part (a non-data part) (for example, a universal SIG U-SIG) (or may have another name) of the first PPDU, and is used to carry parameters related to the first PPDU, for example, parameters such as a modulation and coding scheme (modulation and coding scheme, MCS) and a field length.

In a possible implementation, the subcarrier spacing of the first part of the first PPDU in the first bandwidth is an integer multiple of a subcarrier spacing of the second part of the first PPDU in the first bandwidth. For example, the subcarrier spacing of the first part of the first PPDU in the first bandwidth is 312.5 kHz, and the subcarrier spacing of the second part of the first PPDU in the first bandwidth is 156.25 kHz, or the subcarrier spacing of the second part of the first PPDU in the first bandwidth is 78.125 kHz; or the subcarrier spacing of the first part of the first PPDU in the first bandwidth is 156.25 kHz, and the subcarrier spacing of the second part of the first PPDU in the first bandwidth is 78.125 kHz. This is not limited.

Specifically, this application can support more ratios between the subcarrier spacing of the first part of the first PPDU in the first bandwidth and the subcarrier spacing of the second part of the first PPDU in the first bandwidth. For example, ratio relationships such as 64:64, 64:128, and 64:256 can be supported. In this way, the subcarrier spacing of the first part of the first PPDU in the first bandwidth can be flexibly adjusted, so that requirements of different devices for the subcarrier spacing of the data part can be met.

In a possible implementation, the subcarrier spacing of the second part of the first PPDU in the first bandwidth is an integer multiple of a subcarrier spacing of the first part of the first PPDU in the first bandwidth. For example, the subcarrier spacing of the second part of the first PPDU in the first bandwidth is 312.5 kHz, and the subcarrier spacing of the first part of the first PPDU in the first bandwidth is 156.25 kHz, or the subcarrier spacing of the first part of the first PPDU in the first bandwidth is 78.125 kHz; or the subcarrier spacing of the second part of the first PPDU in the first bandwidth is 156.25 kHz, and the subcarrier spacing of the first part of the first PPDU in the first bandwidth is 78.125 kHz. This is not limited.

Specifically, this application can support more ratios between the subcarrier spacing of the first part of the first PPDU in the first bandwidth and the subcarrier spacing of the second part of the first PPDU in the first bandwidth. For example, ratio relationships such as 64:64, 64:128, and 64:256 can be supported. In this way, the subcarrier spacing of the first part of the first PPDU in the first bandwidth can be flexibly adjusted, so that requirements of different devices for the subcarrier spacing of the data part can be met.

In a possible implementation, the first bandwidth is 20 MHz, the subcarrier spacing of the second part of the first PPDU in the first bandwidth is 312.5 kHz, and indices of subcarriers of the second part of the first PPDU in the first bandwidth include:

$$K_{SP} = \{-21, -7, 7, 21\}, K_{SD} = \{-28, \dots, 28\} - K_{SP} - \{0\}; \text{ or } K_{SP} =$$
$$\{-21, -7, 7, 21\}, \text{and } K_{SD} = \{-26, \dots, 26\} - K_{SP} - \{0\}.$$

In this way, compatibility with an existing standard can be implemented.

In a possible implementation, the first bandwidth is 20 MHz, the subcarrier spacing of the first part of the first PPDU in the first bandwidth is 312.5 kHz, and indices of subcarriers of the first part of the first PPDU in the first bandwidth include:

$$K_{SP} = \{-21, -7, 7, 21\}, \text{and } K_{SD} = \{-28, \dots, 28\} - K_{SP} - \{0\}.$$

In this way, compatibility with an existing standard can be implemented.

Because the first bandwidth further includes the null subcarrier and the guard subcarrier, the pilot subcarriers of the first part of the first PPDU in the first bandwidth may further include at least one of the null subcarrier and the guard subcarrier in the first bandwidth. Therefore, a quantity of pilot subcarriers of the first part of the first PPDU in the first bandwidth can be increased.

Because the first bandwidth further includes the null subcarrier and the guard subcarrier, pilot subcarriers of the second part of the first PPDU in the first bandwidth may further include at least one of the null subcarrier and the guard subcarrier in the first bandwidth. Therefore, a quantity of pilot subcarriers of the second part of the first PPDU in the first bandwidth can be increased.

S702: The first device sends the first part of the first PPDU.

In an embodiment, the first device sending the first part of the first PPDU may be that the first device performs upclocking processing on the first part of the first PPDU, obtains an upclocking version of the first part, and sends the upclocking version of the first part to a second device.

Specifically, the first device may send the first part of the first PPDU in an upclocking manner. In other words, the first device performs upclocking processing on the first part of the first PPDU. In this way, the subcarrier spacing of the first part can be increased. For description of upclocking, refer to the foregoing description. Details are not described again.

The second device may process the first part to obtain information carried in the first part of the first PPDU.

When the first device further generates the second part of the first PPDU, the first device further sends the second part of the first PPDU to the second device, and the second device processes the second part of the first PPDU to obtain information carried in the second part of the first PPDU. In this way, compatibility between devices is ensured. In other words, all devices that support subcarrier spacings of different data parts can understand the preamble signaling part of the first PPDU (the second part of the first PPDU).

In the foregoing description, this application may further support adjustment of locations or a quantity of the subcarriers of the first part of the first PPDU in the first bandwidth, for example, increase or decrease a quantity of the pilot subcarriers or a quantity of the data subcarriers of the first part of the first PPDU in the first bandwidth. Therefore, the indices of the data subcarriers of the first part of the first PPDU in the first bandwidth may be the same as the indices of the data subcarriers of the first part of the second PPDU in the second bandwidth, or may be partially the same as the indices of the data subcarrier of the first part of the first PPDU in the second bandwidth; and the indices of the pilot subcarriers of the first part of the first PPDU in the first bandwidth may be the same as the indices of the pilot subcarriers of the first part of the second PPDU in the second bandwidth, or may be partially the same as the indices of the pilot subcarriers of the first part of the first PPDU in the second bandwidth. This is not limited.

Being "partially the same as (or partially the same)" may include that the quantity of the pilot subcarriers of the first part of the first PPDU in the first bandwidth is greater than or less than a quantity of the pilot subcarriers of the first part of the second PPDU in the second bandwidth; or may include that the quantity of the data subcarriers of the first part of the first PPDU in the first bandwidth is greater than or less than a quantity of the data subcarriers of the first part of the second PPDU in the second bandwidth; or may include that the quantity of the pilot subcarriers of the first part of the first PPDU in the first bandwidth is equal to a quantity of the pilot subcarriers of the first part of the second PPDU in the second bandwidth, and at least one of the indices of the pilot subcarriers of the first part of the first PPDU in the first bandwidth is different from the indices of the pilot subcarriers of the first part of the second PPDU in the second bandwidth (which may be implemented by performing shifting processing on the indices of the pilot subcarriers); or may include that the quantity of the data subcarriers of the first part of the first PPDU in the first bandwidth is equal to a quantity of the data subcarriers of the first part of the second PPDU in the second bandwidth, and at least one of the indices of the data subcarriers of the first part of the first PPDU in the first bandwidth is different from the indices of the data subcarriers of the first part of the second PPDU in the second bandwidth (which may be implemented by performing shifting processing on the indices of the data subcarriers). In this way, configurations of the pilot subcarriers or the data subcarriers of the first part of the first PPDU in the first bandwidth can be more diverse.

In an example, when the quantity of the pilot subcarriers of the first part of the first PPDU in the first bandwidth is the same as the quantity of the pilot subcarriers of the first part of the second PPDU in the second bandwidth, at least one of the indices of the pilot subcarriers of the first part of the first PPDU in the first bandwidth is different from the indices of the pilot subcarriers of the first part of the second PPDU in the second bandwidth. For example, the indices of the pilot subcarriers of the first part of the first PPDU in the first bandwidth are: {1, 3, 5, 7, 9, 11, 13, 15, 17, 19}, and the indices of the pilot subcarriers of the first part of the second PPDU in the second bandwidth are: {1, 2, 3, 4, 5, 6, 7, 8, 9, 10}.

In an example, when the quantity of the pilot subcarriers of the first part of the first PPDU in the first bandwidth is greater than the quantity of the pilot subcarriers of the first part of the second PPDU in the second bandwidth, the indices of the pilot subcarriers of the first part of the first PPDU in the first bandwidth include all the indices of the pilot subcarriers of the first part of the second PPDU in the second bandwidth. For example, the indices of the pilot subcarriers of the first part of the first PPDU in the first bandwidth are: {1, 2, 3, 4, 5, 6, 7, 8, 9, 10, 11, 12}, and the indices of the pilot subcarriers of the first part of the second PPDU in the second bandwidth are: {1, 2, 3, 4, 5, 6, 7, 8, 9, 10}.

For another example, when the quantity of the pilot subcarriers of the first part of the first PPDU in the first bandwidth is greater than the quantity of the pilot subcarriers of the first part of the second PPDU in the second bandwidth, the indices of the pilot subcarriers of the first part of the first PPDU in the first bandwidth include at least one of the indices of the pilot subcarriers of the first part of the second PPDU in the second bandwidth; or at least one of the indices of the pilot subcarriers of the first part of the first PPDU in the first bandwidth is the same as the indices of the pilot subcarriers of the first part of the second PPDU in the second bandwidth. For example, the indices of the pilot subcarriers of the first part of the first PPDU in the first bandwidth are {1, 2, 3, 4, 5, 6, 7, 8, 9, 11, 12, 13}, {1, 2, 3, 4, 5, 6, 12, 13, 14, 15, 16, 17}, or {1, 12, 13, 14, 15, 16, 22, 23, 24, 25, 26, 27}, and the indices of the pilot subcarriers of the first part of the second PPDU in the second bandwidth are {1, 2, 3, 4, 5, 6, 7, 8, 9, 10}. By reusing a subcarrier configuration that is of the first part of the second PPDU in the corresponding bandwidth and that is defined in an existing standard, this application can support more diverse subcarrier configurations (including indices of data subcarriers, indices of pilot subcarriers, a subcarrier spacing, and the like) of the first part of the first PPDU in the first bandwidth. For example, the first bandwidth is 20 MHz, and the second bandwidth is 40 MHz/80 MHz/160 MHz. A subcarrier configuration of the first part of the first PPDU in 20 MHz may respectively correspond to a subcarrier configuration of the first part of the second PPDU in the 40 MHz/80 MHz/160 MHz bandwidth. In this way, the subcarrier configuration of the first part of the first PPDU in the first bandwidth can be flexibly adjusted, so that requirements of different devices for a subcarrier spacing of a data part can be met.

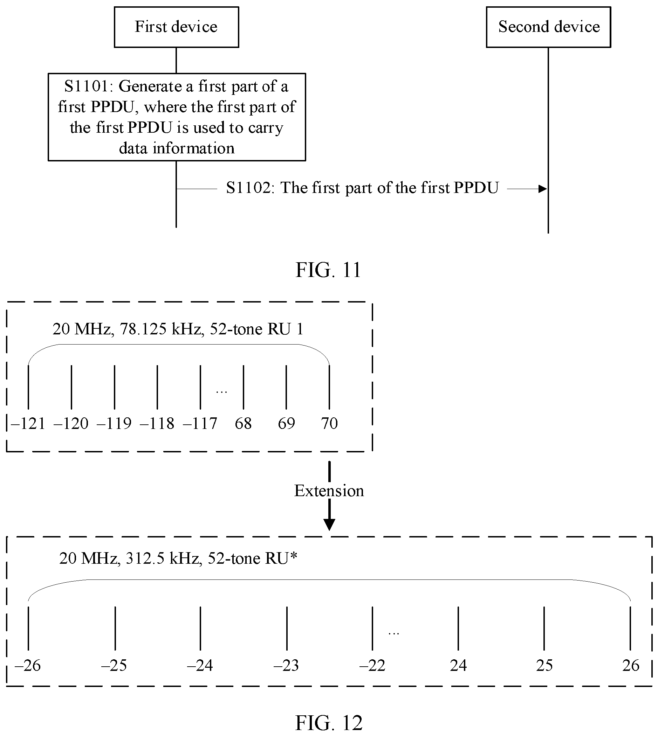

The method shown in FIG. 7 is described by using an example in which the subcarrier configuration of the first part of the first PPDU in the first bandwidth is generated based on the subcarrier configuration of the first part of the second PPDU in the second bandwidth. However, the subcarrier configuration of the first part of the first PPDU in the first bandwidth may also be generated based on a subcarrier configuration of an RU or an MRU. For details, refer to descriptions in FIG. 11.

The following describes another communication method according to an embodiment of this application with reference to FIG. 11.

FIG. 11 is an interaction flowchart of another communication method according to an embodiment of this application. As shown in FIG. 11, the method includes the following steps.

S1101: A first device generates a first part of a first PPDU.

The first part of the first PPDU may be understood as a data part of the first PPDU, and is used to carry the data information. A sum of a quantity of data subcarriers and a quantity of pilot subcarriers corresponding to the first part of the first PPDU is greater than or equal to a quantity of subcarriers of a first RU or a first MRU. A subcarrier spacing corresponding to the first part of the first PPDU is greater than a subcarrier spacing of the first RU or the first MRU.

In a possible implementation, the first RU is an RU whose subcarrier data volume is the closest to a total subcarrier quantity corresponding to the first part of the first PPDU in existing RUs, or the first MRU is an MRU whose subcarrier data volume is the closest to a total subcarrier quantity corresponding to the first part of the first PPDU in existing MRUs. In this way, a quantity of data subcarriers can be maximized based on an existing RU generating module. For details, refer to Table 7 and Table 8. Content shown in Table 7 and Table 8 is merely used as an example for understanding, and is not used as final limitation.

Table 7

| Subcarrier quantity corresponding to the first part of the first PPDU | First RU |
|---|---|
| 64 | 52-tone RU |
| 128 | 106-tone RU |
| 256 | 242-tone RU |
| 512 | 484-tone RU |
| 1024 | 996-tone RU |
| 2048 | 2*996-tone RU |
| 4096 | 4*996-tone RU |

As shown in Table 7, the subcarrier quantity corresponding to the first part of the first PPDU is 64 (the sum of the quantity of data subcarriers and the quantity of pilot subcarriers is less than or equal to 64), and a subcarrier configuration corresponding to the first part of the first PPDU is generated based on a 52-tone RU instead of a 26-tone RU. The subcarrier quantity corresponding to the first part of the first PPDU is 128, and a subcarrier configuration corresponding to the first part of the first PPDU is generated based on a 106-tone RU instead of a 52-tone RU. The subcarrier quantity corresponding to the first part of the first PPDU is 256 (the sum of the quantity of data subcarriers and the quantity of pilot subcarriers is less than or equal to 256), and a subcarrier configuration corresponding to the first part of the first PPDU is generated based on a 242-tone RU instead of a 106-tone RU. The subcarrier quantity corresponding to the first part of the first PPDU is 512 (the sum of the quantity of data subcarriers and the quantity of pilot subcarriers is less than or equal to 512), and a subcarrier configuration corresponding to the first part of the first PPDU is generated based on a 484-tone RU instead of a 242-tone RU. The subcarrier quantity corresponding to the first part of the first PPDU is 1024 (the sum of the quantity of data subcarriers and the quantity of pilot subcarriers is less than or equal to 1024), and a subcarrier configuration corresponding to the first part of the first PPDU is generated based on a 996-tone RU instead of a 484-tone RU. The subcarrier quantity corresponding to the first part of the first PPDU is 2048 (the sum of the quantity of data subcarriers and the quantity of pilot subcarriers is less than or equal to 2048), and a subcarrier configuration corresponding to the first part of the first PPDU is generated based on a 2*996-tone RU instead of a 996-tone RU. The subcarrier quantity corresponding to the first part of the first PPDU is 4096 (the sum of the quantity of data subcarriers and the quantity of pilot subcarriers is less than or equal to 4096), and a subcarrier configuration corresponding to the first part of the first PPDU is generated based on a 4*996-tone RU instead of a 2*996-tone RU.

Table 8

| Subcarrier quantity corresponding to the first part of the first PPDU | First MRU |
|---|---|
| 80 | 52+26-tone MRU |
| 140 | 106+26-tone MRU |
| 750 | 484+242-tone MRU |
| 1500 | 996+484-tone MRU |

As shown in Table 8, the subcarrier quantity corresponding to the first part of the first PPDU is 80 (Subcarrier quantity = Bandwidth/Subcarrier spacing) (the sum of the quantity of data subcarriers and the quantity of pilot subcarriers is less than or equal to 80), and a subcarrier configuration corresponding to the first part of the first PPDU is generated based on a 52+26-tone MRU. The subcarrier quantity corresponding to the first part of the first PPDU is 140 (Subcarrier quantity = Bandwidth/Subcarrier spacing) (the sum of the quantity of data subcarriers and the quantity of pilot subcarriers is less than or equal to 140), and a subcarrier configuration corresponding to the first part of the first PPDU is generated based on a 106+26-tone MRU. The subcarrier quantity corresponding to the first part of the first PPDU is 750 (Subcarrier quantity = Bandwidth/Subcarrier spacing) (the sum of the quantity of data subcarriers and the quantity of pilot subcarriers is less than or equal to 750), and a subcarrier configuration corresponding to the first part of the first PPDU is generated based on a 484+242-tone MRU. The subcarrier quantity corresponding to the first part of the first PPDU is 1500 (Subcarrier quantity = Bandwidth/Subcarrier spacing) (the sum of the quantity of data subcarriers and the quantity of pilot subcarriers is less than or equal to 1500), and a subcarrier configuration corresponding to the first part of the first PPDU is generated based on a 996+484-tone MRU.

With reference to the foregoing content, it can be learned that in a possible implementation, the first RU or the first MRU may be any one of the following:

a 52-tone RU, a 106-tone RU, a 242-tone RU, a 484-tone RU, a 996-tone RU, a 2*996-tone RU, or a 4*996-tone RU. In this way, compatibility with an existing standard can be implemented.

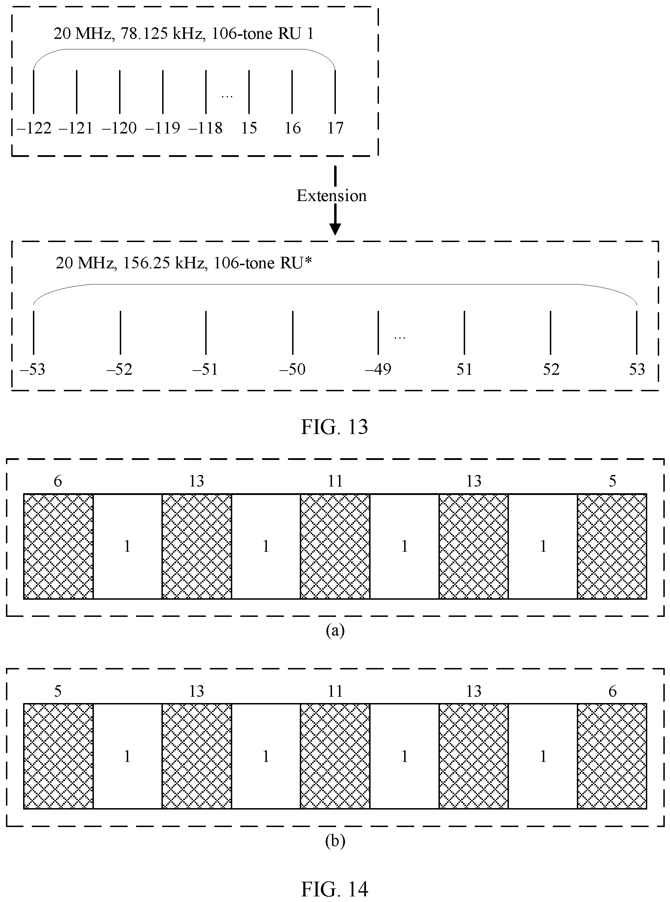

For descriptions of a relationship between the first RU and the first part of the first PPDU, refer to FIG. 12 and FIG. 13. For descriptions of a relationship between the first MRU and the first part of the first PPDU, refer to content in FIG. 12 and FIG. 13. Details are not described below.

FIG. 12 is a diagram of a relationship between a first part of a first PPDU and a first RU. As shown in FIG. 12, a first bandwidth is 20 MHz. Because 20 MHz includes a plurality of 52-tone RUs, a 52-tone RU 1 is used as an example, indices of subcarriers of the 52-tone RU 1 are [-121:-70]-116, -102, -90, -76}. To enable the subcarrier spacing of the first part of the first PPDU in the 20 MHz bandwidth to be 312.5 kHz, this application supports extension of the 52-tone RU 1 to obtain a 52-tone RU* (which is in a customized RU type and is different from an RU defined in an existing standard). The 52-tone RU* (which may also be understood as a subcarrier configuration of the first part of the first PPDU in 20 MHz) can occupy entire 20 MHz. In other words, the 20 MHz bandwidth includes one 52-tone RU*.

In FIG. 12, in a possible implementation, indices of subcarriers of the 52-tone RU* include:

$$K_{SP} = \{-21, -7, 7, 21\}, \text{and } K_{SD} = \{-26, \ldots, 26\} - K_{SP} - \{0\};$$

or

$$K_{SP} = \{-20, -6, 6, 20\}, \text{and } K_{SD} = \{-26, \ldots, 26\} - K_{SP} - \{0\}.$$

In this way, by extending the first RU, this application may support diverse subcarrier spacings of the first part of the first PPDU in corresponding bandwidths.

For descriptions of the 52-tone RU, refer to FIG. 13.

FIG. 13 is a diagram of a 52-tone RU. As shown in (a) in FIG. 13, a type of 52-tone RU is: 6+1+13+1+11+1+13+1+5. A non-1 number indicates a quantity of data subcarriers (represented by using a cross texture block) at a corresponding location in the 52-tone RU, and a number 1 indicates a quantity of pilot subcarriers (represented by using a white box) at a corresponding location in the 52-tone RU. As shown in (b) in FIG. 13, another type of 52-tone RU is: 5+1+13+1+11+1+13+1+6. A non-1 number indicates a quantity of data subcarriers (represented by using a cross texture block) at a corresponding location in the 52-tone RU, and a number 1 indicates a quantity of pilot subcarriers (represented by using a white box) at a corresponding location in the 52-tone RU. Because impact of a direct current component is not considered in an existing 52-tone RU (the foregoing 52-tone RU is located on a left side or a right side of a direct current subcarrier), a quantity of data subcarriers in a middle part of the 52-tone RU is an odd number (11), which does not affect center-based symmetry. However, if the 52-tone RU is designed to pass through the direct current and be extended to 20 MHz, a symmetry requirement is met only when the quantity of data subcarriers in the middle part of the 52-tone RU is an even number. Therefore, a quantity (10 or 12) of data subcarriers in a middle part of the 52-tone RU* obtained through extension based on the 52-tone RU is an even number, so that a symmetry requirement can be met.

FIG. 14 is a diagram of another relationship between a first part of a first PPDU and a first RU. As shown in FIG. 14, a first bandwidth is 20 MHz. Because 20 MHz includes a plurality of 106-tone RUs, a 106-tone RU 1 is used as an example, indices of subcarriers of the 106-tone RU 1 are [-122:-17] {-116, -90, -48, -22}. To enable the subcarrier spacing of the first part of the first PPDU in the 20 MHz bandwidth to be 156.25 kHz, this application supports extension of the 106-tone RU 1 to obtain a 106-tone RU* (which is in a customized RU type and is different from an RU defined in an existing standard). The 106-tone RU* (which may also be understood as a subcarrier configuration of the first part of the first PPDU in 20 MHz) can occupy entire 20 MHz. In other words, the 20 MHz bandwidth includes one 106-tone RU*.

In FIG. 14, in a possible implementation, indices of subcarriers of a 106-tone RU* may include:

$$K_{SP} = \{-47, -21, 21, 47\}, \text{and } K_{SD} = \{-53, \ldots, 53\} - K_{SP} - \{-0\};$$

or

$$K_{SP} = \{-48, -22, 22, 48\}, \text{and } K_{SD} = \{-53, \ldots, 53\} - K_{SP} - \{0\}.$$

In this way, by extending the first RU, this application may support diverse quantities of subcarriers of the first part in the first bandwidth.

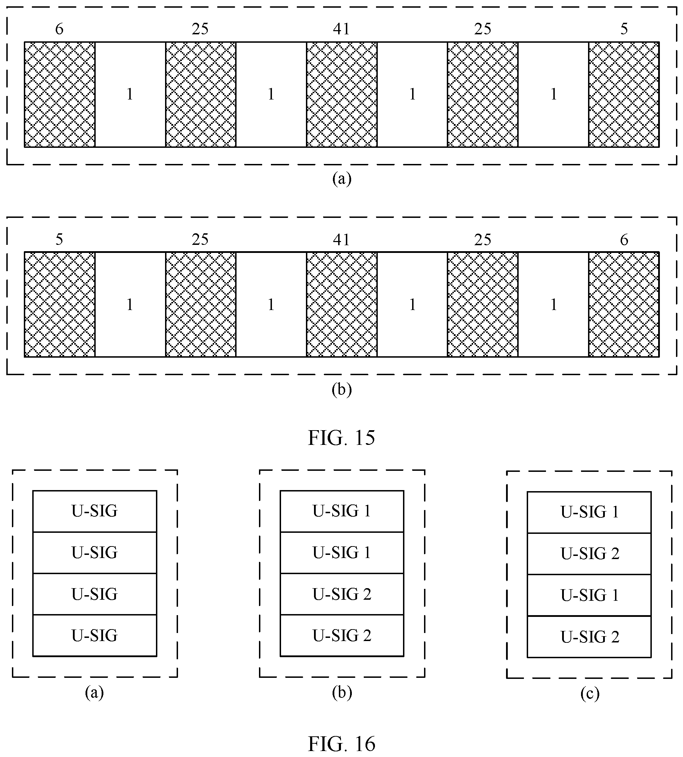

For descriptions of the 106-tone RU, refer to FIG. 15.

FIG. 15 is a diagram of a 106-tone RU. As shown in (a) in FIG. 15, a type of 106-tone RU is:

6+1+25+1+41+1+25+1+5. A non-1 number indicates a quantity of data subcarriers (represented by using a cross texture block) at a corresponding location in the 106-tone RU, and a number 1 indicates a quantity of pilot subcarriers (represented by using a white box) at a corresponding location in the 106-tone RU. As shown in (b) in FIG. 15, another type of 106-tone RU is: 5+1+25+14+41+1+25+1+6. A non-1 number indicates a quantity of data subcarriers (represented by using a cross texture block) at a corresponding location in the 106-tone RU, and a number 1 indicates a quantity of pilot subcarriers (represented by using a white box) at a corresponding location in the 106-tone RU. Because impact of a direct current component is not considered in an existing 106-tone RU (the foregoing 106-tone RU is located on a left side or a right side of a direct current subcarrier), a quantity of data subcarriers in a middle part of the 106-tone RU is an odd number (41), which does not affect center-based symmetry. However, if the 106-tone RU is designed to pass through a direct current and be extended to 20 MHz, a symmetry requirement is met only when the quantity of data subcarriers in the middle part of the 106-tone RU is an even number. Therefore, a quantity of data subcarriers in a middle part of the 106-tone RU* obtained through extension based on the 106-tone RU is an even number (40 or 42), so that a symmetry requirement can be met.

It should be noted that FIG. 12 shows an example in which the first bandwidth is 20 MHz and the first RU is a 52-tone RU, and FIG. 13 shows an example in which the first bandwidth is 20 MHz and the first RU is a 106-tone RU. However, the foregoing content is merely used as an example for description, and is not used as final limitation.

Optionally, when the first RU is a 242-tone RU, a subcarrier configuration of the 242-tone RU may be reused for the subcarrier configuration corresponding to the first part of the first PPDU. Details are not described herein again.

It should be noted that a quantity of direct current subcarriers is further considered in a location relationship between data subcarriers and pilot subcarriers in the foregoing listed subcarrier indices. Details are as follows.

$$K_{SP}=\{-21, -7, 7, 21\}, \text{ and } K_{SD}=\{-26, ..., 26\}-KSP-\{0\}.$$

In an implementation, the quantity of direct current subcarriers may be changed without changing the quantity of data subcarriers and the quantity of pilot subcarriers. In this case, the pilot subcarriers or the data subcarriers need to be entirely correspondingly shifted leftward or rightward. This is shown below:

$$K_{SP}=\{-22, -8, 8, 22\}, \text{ and } K_{SD}=\{-27, ..., 27\}-K_{SP}-\{-1, 0, +1\}.$$

Alternatively, data subcarriers are supplemented externally, and locations of pilot subcarriers remain unchanged. Description is provided as the following example.

$$K_{SP}=\{-21, -7, 7, 21\}, \text{ and } K_{SD}=\{-27, ..., 27\}-K_{SP}-\{-1, 0, +1\}.$$

In addition, the first PPDU may further include a second part. For descriptions of the second part of the first PPDU, refer to the descriptions in FIG. 7. Details are not described again below.

S1102: The first device sends the first part of the first PPDU.

For descriptions of S1102, refer to the descriptions of S702. Details are not described again.

By using a subcarrier configuration that is of an RU or an MRU and that is defined in an existing standard, this application can support more diverse subcarrier configurations (including indices of data subcarriers, indices of pilot subcarriers, a subcarrier spacing, and the like) corresponding to the first part of the first PPDU. For example, a subcarrier configuration of a 52-tone RU/106-tone RU may be modified to obtain the subcarrier configuration corresponding to the first part of the first PPDU. In this way, the subcarrier configuration of the first part of the first PPDU can be flexibly adjusted, so that requirements of different devices for a subcarrier spacing of a data part can be met.

It should be noted that content shown in FIG. 11 to FIG. 15 is described by using an RU as an example. However, this application also supports extension of an MRU, and therefore can support diverse quantities of subcarriers of the first part in the first bandwidth. A solution for extending the MRU is the same as a solution for extending the RU. Details are not described below again.

With reference to content in FIG. 7 to FIG. 15, this application is mainly described by using an example in which the first bandwidth is 20 MHz. However, the first bandwidth may alternatively be a bandwidth greater than 20 MHz, for example, 40 MHz, 80 MHz, or a bandwidth that is an integer multiple of 20 MHz. For details, refer to Table 9 and FIG. 16. Although the bandwidth is increased, the method is still the method described above. Indices of all or some subcarriers of data subcarriers or pilot subcarriers may be obtained by performing compression based on a second PPDU of a larger second bandwidth, or may be obtained by extending an RU or an MRU. A manner of selecting an extended RU may be shown in Table 7.

When the first bandwidth is a bandwidth greater than 20 MHz, this application supports replication by using the 20 MHz bandwidth as a unit. For example, if the first bandwidth is 40 MHz, the 20 MHz bandwidth may be replicated once, and subcarrier configurations of the first part in 20 MHz bandwidths are consistent. In other words, the subcarrier configuration of the first part in the 20 MHz bandwidth is the same as those shown in FIG. 7 and FIG. 11. If the first bandwidth is 80 MHz, the 20 MHz bandwidth may be replicated twice, and subcarrier configurations of the first part in 20 MHz bandwidths are consistent. For details, refer to Table 9. Content shown in Table 9 is merely used as an example for understanding, and is not used as final limitation.

Table 9

| First bandwidth | Second part of the first PPDU | First part of the first PPDU |
| --- | --- | --- |
| 40 MHz | 64*2 (312.5 kHz) | 64*2 (312.5 kHz) |
| | 64*2 (312.5 kHz) | 128*2 (156.25 kHz) |
| | 64*2 (312.5 kHz) | 256*2 (78.125 kHz) |
| 80 MHz | 64*4 (312.5 kHz) | 64*4 (312.5 kHz) |
| | 64*4 (312.5 kHz) | 128*4 (156.25 kHz) |
| | 64*4 (312.5 kHz) | 256*4 (78.125 kHz) |

As shown in Table 9, the first bandwidth is 40 MHz, and a quantity of subcarriers of the first part in a 20 MHz bandwidth is 64, 128, or 256. Replication may be performed twice by using the 20 MHz bandwidth as a unit. Different content may be carried in 20 MHz bandwidths, but subcarrier configurations may be similar. When the first bandwidth is 80 MHz, and a quantity of subcarriers of the first part in a 20 MHz bandwidth is 64, 128, or 256. Replication may be performed four times by using the 20 MHz bandwidth as a unit. Different content may be carried in 20 MHz bandwidths, but subcarrier configurations may be similar.

FIG. 16 is a diagram of a second part of a first PPDU in a large bandwidth. For example, the first bandwidth is 80 MHz, and replication is performed by using a 20 MHz bandwidth as a unit. As shown in (a) in FIG. 16, if replication is performed by using the 20 MHz bandwidth as a unit, the 20 MHz bandwidth may be replicated twice. Each U-SIG in (a) in FIG. 16 may represent the second part of the first PPDU. After replication is performed twice by using the 20 MHz bandwidth as a unit, four U-SIGs may be obtained. The U-SIGs may carry different information or same information. This is not limited. Subcarrier configurations of the U-SIGs are consistent in 20 MHz. As shown in (b) in FIG. 16, if replication is performed by using the 20 MHz bandwidth as a unit, the 20 MHz bandwidth may be replicated twice to obtain a U-SIG 1, a U-SIG 1, a U-SIG 2, and a U-SIG 2. The two U-SIGs 1 carry same information, and the two U-SIGs 2 carry same information. Subcarrier configurations of the U-SIGs are consistent in 20 MHz bandwidths. As shown in (c) in FIG. 16, if replication is performed by using the 20 MHz bandwidth as a unit, the 20 MHz bandwidth may be replicated twice to obtain a U-SIG 1, a U-SIG 2, a U-SIG 1, and a U-SIG 2. The two U-SIGs 1 carry same information, and the two U-SIGs 2 carry same information. Subcarrier configurations of the U-SIGs are consistent in 20 MHz bandwidths.

In addition, for a diagram of the first part of the first PPDU in a large bandwidth, refer to the descriptions in FIG. 16. Details are not described again. It should be noted that, the first part of the first PPDU in the large bandwidth may also be replicated by using 20 MHz as a unit, to obtain a plurality of first parts. The parts carry same or different information. This is not limited herein. Subcarrier configurations of the first parts are consistent in 20 MHz bandwidths. For configurations of other bandwidths, refer to the foregoing descriptions. Details are not described again.

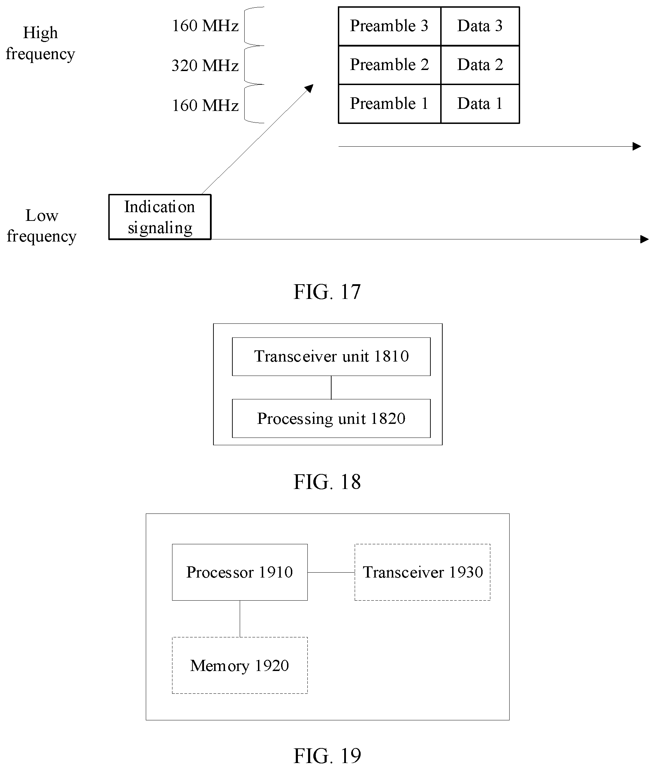

It should be noted that, in the methods shown in FIG. 7 and FIG. 11, a first device sends a first part of a first PPDU to a second device, and the first device may further send, to the second device, indication indicating a subcarrier spacing of the first part of the first PPDU in a first bandwidth. For details, refer to FIG. 17.

FIG. 17 is a diagram of interaction signaling between a first device and a second device. As shown in FIG. 17, the first device may send indication signaling to the second device at a low frequency. The indication signaling indicates a subcarrier spacing of a first part of a first PPDU in a first bandwidth. In this way, the second device may determine the subcarrier spacing of the first part of the first PPDU in the first bandwidth based on the indication signaling. In this way, the second device can obtain information about the subcarrier spacing of the first part of the first PPDU in the first bandwidth.

In a possible implementation, the first device may alternatively send the indication signaling to the second device at a high frequency. This is not limited herein.

In a possible implementation, the indication signaling may indicate target wake time (target wake time, TWT) channel information that is used to notify information related to a high-frequency parking channel, so that the second device obtains a parking location at a high frequency to receive or send a PPDU. For example, the indication signaling indicates channel-related information of a PPDU (including a preamble 2 and data 2) corresponding to 320 MHz, or the indication signaling may further indicate channel-related information of a PPDU (including a preamble 1 and data 1) corresponding to 160 MHz.

In a possible implementation, the indication signaling may further indicate data channel allocation information that is used to notify information about a resource occupied by a data field, for example, a specific occupied channel (the information may be consistent with or different from the parking information).

In a possible implementation, the indication signaling may further indicate beam information, such as a sector ID, that is used to notify a device or a peer device of sector ID information corresponding to a PPDU sent at a high frequency, or information such as omnidirectional sending or directional sending.

The foregoing listed information may alternatively be indicated in a PHY of a high-frequency PPDU, that is, be put into a physical layer signaling indication, for example, beam information such as the subcarrier spacing of the first part of the first PPDU in the first bandwidth, the data channel allocation information, and the sector ID.

It should be noted that the foregoing description is merely used as an example for description, and is not used as final limitation.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

The following describes apparatuses in this application in detail with reference to FIG. 18 to FIG. 20. It should be understood that descriptions of apparatus embodiments correspond to the descriptions of the method embodiments. Therefore, for content that is not described in detail, refer to the foregoing method embodiments. For brevity, some content is not described again.

In embodiments of this application, the first device or the second device may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

FIG. 18 is a block diagram of a communication apparatus according to an embodiment of this application. As shown in FIG. 18, the communication apparatus may include a transceiver unit 1810 and a processing unit 1820. The transceiver unit 1810 may communicate with the outside, and the processing unit 1820 is configured to process data. The transceiver unit 1810 may also be referred to as a communication interface or a communication unit.

Optionally, the communication apparatus may further include a storage unit. The storage unit may be configured to store instructions and/or data. The processing unit 1820 may read the instructions and/or the data in the storage unit, so that the communication apparatus implements the foregoing method embodiments.

In a first design, the communication apparatus may be the first device in the foregoing embodiments, or may be a component (for example, a chip) of the first device. The communication apparatus may implement steps or procedures performed by the first device in the foregoing method embodiments. The transceiver unit 1810 may be configured to perform operations related to sending and receiving of the first device in the foregoing method embodiments. The processing unit 1820 may be configured to perform operations related to processing of the first device in the foregoing method embodiments.

In a possible implementation, the processing unit 1820 is configured to generate a first part of a first PPDU; and the transceiver unit 1810 is configured to send the first part of the first PPDU.

In a second design, the communication apparatus may be the second device in the foregoing embodiments, or may be a component (for example, a chip) of the second device. The communication apparatus may implement steps or procedures performed by the second device in the foregoing method embodiments. The transceiver unit 1810 may be configured to perform operations related to sending and receiving of the second device in the foregoing method embodiments. The processing unit 1820 may be configured to perform operations related to processing of the second device in the foregoing method embodiments.

In a possible implementation, the transceiver unit 1810 is configured to receive a first part of a first PPDU; and the processing unit 1820 is configured to parse the first part of the first PPDU.

It should be understood that specific processes of performing the foregoing corresponding steps by the units are described in detail in the foregoing method embodiments. For brevity, details are not described herein again.

It should also be understood that the communication apparatus herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

In an optional example, a person skilled in the art may understand that the communication apparatus may be specifically the first device in the foregoing embodiments, and may be configured to perform the procedures and/or the steps corresponding to the first device in the foregoing method embodiments. Alternatively, the communication apparatus may be specifically the second device in the foregoing embodiments, and may be configured to perform the procedures and/or the steps corresponding to the second device in the foregoing method embodiments. To avoid repetition, details are not described herein again. The transceiver unit 1810 may alternatively be a transceiver circuit (for example, may include a receiver circuit and a transmitter circuit), and the processing unit 1820 may be a processing circuit.

The communication apparatus in FIG. 18 may be the device in the foregoing embodiments, or may be a chip or a chip system, for example, a system on a chip (system on a chip, SoC). The transceiver unit may be an input/output circuit or a communication interface. The processing unit is a processor, a microprocessor, or an integrated circuit integrated on the chip. This is not limited herein.

The communication apparatus in the foregoing solutions has a function of implementing the corresponding steps performed by the first device or the second device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit such as the processing unit may be replaced by a processor, to separately perform receiving and sending operations and a related processing operation in the method embodiments.

FIG. 19 is a block diagram of another communication apparatus according to an embodiment of this application. The communication apparatus includes a processor 1910. The processor 1910 is configured to: execute a computer program or instructions stored in a memory 1920, or read data/signaling stored in a memory 1920, to perform the methods in the foregoing method embodiments. Optionally, there are one or more processors 1910.

Optionally, as shown in FIG. 19, the communication apparatus further includes the memory 1920, and the memory 1920 is configured to store a computer program or instructions and/or data. The memory 1920 may be integrated with the processor 1910, or may be disposed separately. Optionally, there are one or more memories 1920.

Optionally, as shown in FIG. 19, the communication apparatus further includes a transceiver 1930. The transceiver 1930 is configured to receive and/or send a signal. For example, the processor 1910 is configured to control the transceiver 1930 to send and/or receive a signal.

In a solution, the communication apparatus is configured to implement operations performed by the first device in the foregoing method embodiments.

For example, the processor 1910 is configured to execute the computer program or the instructions stored in the memory 1920, to implement related operations of the first device in the foregoing method embodiments, for example, the method performed by the first device in the embodiment shown in FIG. 7 or FIG. 11.

In another solution, the communication apparatus is configured to implement operations performed by the second device in the foregoing method embodiments.

For example, the processor 1910 is configured to execute the computer program or the instructions stored in the memory 1920, to implement related operations of the second device in the foregoing method embodiments, for example, the method performed by the second device in the embodiment shown in FIG. 7 or FIG. 11.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) may be integrated into the processor.

It should further be noted that the memory described in this specification is intended to include, but is not limited to, these memories and any other appropriate type of memory.

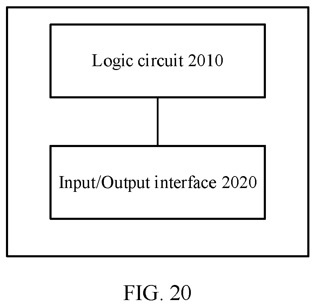

FIG. 20 is a block diagram of a chip system according to an embodiment of this application. The chip system (or referred to as a processing system) includes a logic circuit 2010 and an input/output interface (input/output interface) 2020.

The logic circuit 2010 may be a processing circuit in the chip system. The logic circuit 2010 may be coupled to and connected to a storage unit, and invoke instructions in the storage unit, so that the chip system can implement the methods and functions in embodiments of this application. The input/output interface 2020 may be an input/output circuit in the chip system, and outputs information processed by the chip system, or inputs to-be-processed data or signaling information to the chip system for processing.

Specifically, for example, if the chip system is installed on the first device, the logic circuit 2010 is coupled to the input/output interface 2020, the logic circuit 2010 may send a first part of a first PPDU by using the input/output interface 2020, and the first part of the first PPDU may be generated by the logic circuit 2010. For another example, if the chip system is installed on the second device, the logic circuit 2010 is coupled to the input/output interface 2020, the logic circuit 2010 may receive a first part of a first PPDU by using the input/output interface 2020, and the logic circuit 2010 processes the first part of the first PPDU.

In a solution, the chip system is configured to implement operations performed by the first device in the foregoing method embodiments.

For example, the logic circuit 2010 is configured to implement an operation related to processing performed by the first device in the foregoing method embodiments, for example, an operation related to processing performed by the first device in the embodiment shown in FIG. 7 or FIG. 11. The input/output interface 2020 is configured to implement an operation related to sending and/or receiving performed by the first device in the foregoing method embodiments, for example, an operation related to sending and/or receiving performed by the first device in the embodiment shown in FIG. 7 or FIG. 11.

In another solution, the chip system is configured to implement operations performed by the second device in the foregoing method embodiments.

For example, the logic circuit 2010 is configured to implement an operation related to processing performed by the second device in the foregoing method embodiments, for example, an operation related to processing performed by the second device in the embodiment shown in FIG. 7 or FIG. 11. The input/output interface 2020 is configured to implement an operation related to sending and/or receiving performed by the second device in the foregoing method embodiments, for example, an operation related to sending and/or receiving performed by the second device in the embodiment shown in FIG. 7 or FIG. 11.

An embodiment of this application further provides a computer-readable storage medium. The computer-readable storage medium stores computer instructions for implementing the method performed by a device in the foregoing method embodiments.

For example, when a computer program is executed by a computer, the computer is enabled to implement the method performed by the first device in the foregoing method embodiments. For another example, when a computer program is executed by a computer, the computer is enabled to implement the method performed by the second device in the foregoing method embodiments.

An embodiment of this application further provides a computer program product, including instructions. When the instructions are executed by a computer, the method performed by a device (for example, the first device or the second device) in the foregoing method embodiments is implemented.

An embodiment of this application further provides a communication system, including the first device and the second device.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   generating a first part of a first physical layer protocol data unit PPDU, wherein the first part of the first PPDU is used to carry data information, indices of data subcarriers of the first part of the first PPDU in a first bandwidth are the same as or partially the same as indices of data subcarriers of a first part of a second PPDU in a second bandwidth, indices of pilot subcarriers of the first part of the first PPDU in the first bandwidth are the same as or partially the same as indices of pilot subcarriers of the first part of the second PPDU in the second bandwidth, a subcarrier spacing of the first part of the first PPDU in the first bandwidth is less than a subcarrier spacing of the first part of the second PPDU in the second bandwidth, the second bandwidth is greater than the first bandwidth, the second PPDU is any one of a very high throughput VHT PPDU, a high efficiency HE PPDU, an ultra-high reliability UHR PPDU, and an extremely high throughput EHT PPDU, and the first part of the second PPDU is used to carry data information; and
   sending the first part of the first PPDU.

2. A communication method, comprising:

   receiving a first part of a first PPDU, wherein the first part of the first PPDU is used to carry data information, indices of data subcarriers of the first part of the first PPDU in a first bandwidth are the same as or partially the same as indices of data subcarriers of a first part of a second PPDU in a second bandwidth, indices of pilot subcarriers of the first part of the first PPDU in the first bandwidth are the same as or partially the same as indices of pilot subcarriers of the first part of the second PPDU in the second bandwidth, a subcarrier spacing of the first part of the first PPDU in the first bandwidth is less than a subcarrier spacing of the first part of the second PPDU in the second bandwidth, the second bandwidth is greater than the first bandwidth, the second PPDU is any one of a VHT PPDU, an HE PPDU, a UHR PPDU, and an EHT PPDU, and the first part of the second PPDU is used to carry data information; and
   processing the first part of the first PPDU.

3. The method according to claim 1, wherein the method further comprises:

   generating a second part of the first PPDU, wherein the second part of the first PPDU is used to carry signaling information, and
   a subcarrier spacing of the second part of the first PPDU in the first bandwidth is an integer multiple of the subcarrier spacing of the first part of the first PPDU in the first bandwidth, or
   the subcarrier spacing of the first part of the first PPDU in the first bandwidth is an integer multiple of a subcarrier spacing of the second part of the first PPDU in the first bandwidth; and
   sending the second part of the first PPDU.

4. The method according to claim 2, wherein the method further comprises:

receiving a second part of the first PPDU, wherein the second part of the first PPDU is used to carry signaling information, and

a subcarrier spacing of the second part of the first PPDU in the first bandwidth is an integer multiple of the subcarrier spacing of the first part of the first PPDU in the first bandwidth, or

the subcarrier spacing of the first part of the first PPDU in the first bandwidth is an integer multiple of a subcarrier spacing of the second part of the first PPDU in the first bandwidth; and

processing the second part of the first PPDU.

5. The method according to claim 3 or 4, wherein

the subcarrier spacing of the second part of the first PPDU in the first bandwidth is 312.5 kHz; and
the subcarrier spacing of the first part of the first PPDU in the first bandwidth is 312.5 kHz, 156.25 kHz, or 78.125 kHz.

6. The method according to any one of claims 1 to 5, wherein the first bandwidth is an integer multiple of 20 MHz.

7. The method according to claim 5 or 6, wherein the indices of the data subcarriers of the first part of the first PPDU in the first bandwidth are the same as the indices of the data subcarriers of the first part of the second PPDU in the second bandwidth, the indices of the pilot subcarriers of the first part of the first PPDU in the first bandwidth are the same as the indices of the pilot subcarriers of the first part of the second PPDU in the second bandwidth, the subcarrier spacing of the first part of the first PPDU in the first bandwidth is 312.5 kHz, the first bandwidth is 20 MHz, and indices of subcarriers of the first part of the first PPDU in the first bandwidth comprise:

$$K_{SP} = \{-21, -7, 7, 21\}, \text{and } K_{SD} = \{-28, \dots, 28\} - K_{SP} - \{0\},$$

wherein

$K_{SP}$ indicates an index set of pilot subcarriers, $K_{SD}$ indicates an index set of data subcarriers, and $K_{SD}$ comprises 52 indices.

8. The method according to claim 5 or 6, wherein the indices of the data subcarriers of the first part of the first PPDU in the first bandwidth are the same as the indices of the data subcarriers of the first part of the second PPDU in the second bandwidth, the indices of the pilot subcarriers of the first part of the first PPDU in the first bandwidth are the same as the indices of the pilot subcarriers of the first part of the second PPDU in the second bandwidth, the subcarrier spacing of the first part of the first PPDU in the first bandwidth is 156.25 kHz, the first bandwidth is 20 MHz, and indices of subcarriers of the first part of the first PPDU in the first bandwidth comprise:

$$K_{SP} = \{-53, -25, -11, 11, 25, 53\}, \text{and } K_{SD} = \{-58, \dots, 58\} - K_{SP} - \{-1, 0, 1\},$$

wherein

$K_{SP}$ indicates an index set of pilot subcarriers, $K_{SD}$ indicates an index set of data subcarriers, and $K_{SD}$ comprises 108 indices.

9. The method according to claim 5 or 6, wherein the indices of the data subcarriers of the first part of the first PPDU in the first bandwidth are the same as the indices of the data subcarriers of the first part of the second PPDU in the second bandwidth, the indices of the pilot subcarriers of the first part of the first PPDU in the first bandwidth are the same as the indices of the pilot subcarriers of the first part of the second PPDU in the second bandwidth, the subcarrier spacing of the first part of the first PPDU in the first bandwidth is 78.125 kHz, the first bandwidth is 20 MHz, and indices of subcarriers of the first part of the first PPDU in the first bandwidth comprise:

$$K_{SP} = \{-103, -75, -39, -11, 11, 39, 75, 103\},$$

and

$$K_{SD} = \{-122, \dots, 122\} - K_{SP} - \{-1, 0, 1\},$$

wherein

$K_{SP}$ indicates an index set of pilot subcarriers, $K_{SD}$ indicates an index set of data subcarriers, and $K_{SD}$ comprises 234 indices.

10. The method according to any one of claims 3 to 9, wherein the first bandwidth is 20 MHz, and indices of subcarriers of the second part of the first PPDU in the first bandwidth comprise:

$$K_{SP} = \{-21, -7, 7, 21\}, \text{and } K_{SD} = \{-28, \dots, 28\} - K_{SP} - \{0\},$$

, wherein

$K_{SP}$ indicates an index set of pilot subcarriers, $K_{SD}$ indicates an index set of data subcarriers, and $K_{SD}$ comprises 52 indices.

11. The method according to any one of claims 3 to 9, wherein the first bandwidth is 20 MHz, and indices of subcarriers of the second part of the first PPDU in the first bandwidth comprise:

$$K_{SP} = \{-21, -7, 7, 21\}, \text{and } K_{SD} = \{-26, \dots, 26\} - K_{SP} - \{0\},$$

wherein

$K_{SP}$ indicates an index set of pilot subcarriers, $K_{SD}$ indicates an index set of data subcarriers, and $K_{SD}$ comprises 48 indices.

12. The method according to any one of claims 1 to 6, wherein the indices of the pilot subcarriers of the first part of the first PPDU in the first bandwidth are partially the same as the indices of the pilot subcarriers of the first part of the second PPDU in the second bandwidth, and being partially the same comprises:

when a quantity of the pilot subcarriers of the first part of the first PPDU in the first bandwidth is the same as a quantity of the pilot subcarriers of the first part of the second PPDU in the second bandwidth, at least one of the indices of the pilot subcarriers of the first part of the first PPDU in the first bandwidth is different from the indices of the pilot subcarriers of the first part of the second PPDU in the second bandwidth; or

when a quantity of the pilot subcarriers of the first part of the first PPDU in the first bandwidth is greater than a quantity of the pilot subcarriers of the first part of the second PPDU in the second bandwidth, the pilot subcarriers of the first part of the first PPDU in the first bandwidth further comprise at least one of a null subcarrier and a guard subcarrier in the first bandwidth.

13. The method according to any one of claims 3 to 12, wherein the pilot subcarriers of the second part of the first PPDU in the first bandwidth further comprise at least one of a null subcarrier and a guard subcarrier in the first bandwidth.

14. The method according to any one of claims 1, 3, and 5 to 13, wherein the method further comprises:
sending indication signaling, wherein the indication signaling indicates the subcarrier spacing of the first part of the first PPDU in the first bandwidth.

15. The method according to any one of claims 2, and 4 to 13, wherein the method further comprises:
receiving indication signaling, wherein the indication signaling indicates the subcarrier spacing of the first part of the first PPDU in the first bandwidth.

16. A communication method, comprising:

generating a first part of a first PPDU, wherein the first part of the first PPDU is used to carry data information, a sum of a quantity of data subcarriers and a quantity of pilot subcarriers corresponding to the first part of the first PPDU is greater than or equal to a subcarrier quantity of a first resource unit RU or a first multi-resource unit MRU, and a subcarrier spacing corresponding to the first part of the first PPDU is greater than a subcarrier spacing of the first RU or the first MRU; and
sending the first part of the first PPDU.

17. A communication method, comprising:

receiving a first part of a first PPDU, wherein the first part of the first PPDU is used to carry data information, a sum of a quantity of data subcarriers and a quantity of pilot subcarriers corresponding to the first part of the first PPDU is greater than or equal to a subcarrier quantity of a first resource unit RU or a first multi-resource unit MRU, and a subcarrier spacing corresponding to the first part of the first PPDU is greater than a subcarrier spacing of the first RU or the first MRU; and

processing the first part of the first PPDU.

18. The method according to claim 16, wherein the method further comprises:

generating a second part of the first PPDU, wherein the second part of the first PPDU is used to carry signaling information, and

a subcarrier spacing corresponding to the second part of the first PPDU is an integer multiple of a subcarrier spacing corresponding to the first part of the first PPDU, or

a subcarrier spacing corresponding to the first part of the first PPDU is an integer multiple of a subcarrier spacing corresponding to the second part of the first PPDU; and

sending the second part of the first PPDU.

19. The method according to claim 17, wherein the method further comprises:

receiving a second part of the first PPDU, wherein the second part of the first PPDU is used to carry signaling information, and

a subcarrier spacing corresponding to the second part of the first PPDU is an integer multiple of a subcarrier spacing corresponding to the first part of the first PPDU, or

a subcarrier spacing corresponding to the first part of the first PPDU is an integer multiple of a subcarrier spacing corresponding to the second part of the first PPDU; and

processing the second part of the first PPDU.

20. The method according to claim 18 or 19, wherein

the subcarrier spacing corresponding to the second part of the first PPDU is 312.5 kHz; and
the subcarrier spacing corresponding to the first part of the first PPDU is 312.5 kHz or 156.25 kHz.

21. The method according to any one of claims 16 to 20, wherein the first RU is an RU whose subcarrier quantity is the closest to a total subcarrier quantity corresponding to the first part of the first PPDU in existing RUs, or the first MRU is an MRU whose subcarrier quantity is the closest to a total subcarrier quantity corresponding to the first part of the first PPDU in existing MRUs.

22. The method according to any one of claims 16 to 21, wherein the first RU or the first MRU is any one of the following: a 52-tone RU, a 106-tone RU, a 242-tone RU, a 484-tone RU, a 996-tone RU, a 2*996-tone RU, or a 4*996-tone RU.

23. The method according to claim 22, wherein the subcarrier spacing corresponding to the first part of the first PPDU is 312.5 kHz, the first RU or the first MRU is a 52-tone RU, and indices of subcarriers corresponding to the first part of the first PPDU comprise:

$$K_{SP} = \{-21, -7, 7, 21\}, \text{and } K_{SD} = \{-26, \dots, 26\} - K_{SP} - \{0\},$$

wherein
$K_{SP}$ indicates an index set of pilot subcarriers, $K_{SD}$ indicates an index set of data subcarriers, and $K_{SD}$ comprises 48 indices.

24. The method according to claim 22, wherein the subcarrier spacing corresponding to the first part of the first PPDU is 312.5 kHz, the first RU or the first MRU is a 52-tone RU, and indices of subcarriers corresponding to the first part of the first PPDU comprise:

$$K_{SP} = \{-20, -6, 6, 20\}, \text{and } K_{SD} = \{-26, \dots, 26\} - K_{SP} - \{0\},$$

wherein

$K_{SP}$ indicates an index set of pilot subcarriers, $K_{SD}$ indicates an index set of data subcarriers, and $K_{SD}$ comprises 48 indices.

25. The method according to claim 22, wherein the subcarrier spacing corresponding to the first part of the first PPDU is 156.25 kHz, the first RU or the first MRU is a 106-tone RU, and indices of subcarriers corresponding to the first part of the first PPDU comprise:

$$K_{SP} = \{-47, -21, 21, 47\}, \text{and } K_{SD} = \{-53, \dots, 53\} - K_{SP} - \{-0\},$$

, wherein

$K_{SP}$ indicates an index set of pilot subcarriers, $K_{SD}$ indicates an index set of data subcarriers, and $K_{SD}$ comprises 102 indices.

26. The method according to claim 22, wherein the subcarrier spacing corresponding to the first part of the first PPDU is 156.25 kHz, the first RU or the first MRU is a 106-tone RU, and indices of subcarriers corresponding to the first part of the first PPDU comprise:

$$K_{SP} = \{-48, -22, 22, 48\}, \text{and } K_{SD} = \{-53, \dots, 53\} - K_{SP} - \{0\},$$

wherein

$K_{SP}$ indicates an index set of pilot subcarriers, $K_{SD}$ indicates an index set of data subcarriers, and $K_{SD}$ comprises 102 indices.

27. The method according to any one of claims 18 to 26, wherein the subcarrier spacing corresponding to the second part of the first PPDU is 312.5 kHz, and indices of subcarriers corresponding to the second part of the first PPDU comprise:

$$K_{SP} = \{-21, -7, 7, 21\}, \text{and } K_{SD} = \{-26, \dots, 26\} - K_{SP} - \{0\},$$

wherein

$K_{SP}$ indicates an index set of pilot subcarriers, $K_{SD}$ indicates an index set of data subcarriers, and $K_{SD}$ comprises 48 indices.

28. The method according to any one of claims 18 to 26, wherein the subcarrier spacing corresponding to the second part of the first PPDU is 312.5 kHz, and indices of subcarriers corresponding to the second part of the first PPDU comprise:

$$K_{SP} = \{-21, -7, 7, 21\}, \text{and } K_{SD} = \{-28, \dots, 28\} - K_{SP} - \{0\},$$

wherein

$K_{SP}$ indicates an index set of pilot subcarriers, $K_{SD}$ indicates an index set of data subcarriers, and $K_{SD}$ comprises 48 indices.

29. The method according to any one of claims 18 to 27, wherein the pilot subcarriers corresponding to the first part of the first PPDU further comprise at least one of a null subcarrier and a guard subcarrier in a bandwidth corresponding to the first part of the first PPDU.

30. The method according to any one of claims 18 to 29, wherein pilot subcarriers corresponding to the second part of the first PPDU further comprise at least one of a null subcarrier and a guard subcarrier in a bandwidth corresponding to the second part of the first PPDU.

31. The method according to any one of claims 16, 18, and 20 to 30, wherein the method further comprises:
sending indication signaling, wherein the indication signaling indicates the subcarrier spacing corresponding to the first part of the first PPDU.

32. The method according to any one of claims 17, and 19 to 30, wherein the method further comprises:

receiving indication signaling, wherein the indication signaling indicates the subcarrier spacing corresponding to the first part of the first PPDU.

33. A communication apparatus, comprising a processor, wherein the processor is configured to: by executing a computer program or instructions or through a logic circuit,

> enable the communication apparatus to perform the method according to any one of claims 1, 3, and 5 to 14, or
> enable the communication apparatus to perform the method according to any one of claims 2, 4 to 13, and 15, or
> enable the communication apparatus to perform the method according to any one of claims 16, 18, and 20 to 31, or
> enable the communication apparatus to perform the method according to any one of claims 17, 19 to 30, and 32.

34. The apparatus according to claim 33, wherein the communication apparatus further comprises a memory, and the memory is configured to store the computer program or the instructions.

35. The apparatus according to claim 33 or 34, wherein the communication apparatus further comprises a communication interface, and the communication interface is configured to input and/or output a signal.

36. A communication apparatus, comprising a processing circuit and an input/output interface, wherein the input/output interface is configured to input and/or output a signal; and

> the processing circuit is configured to perform the method according to any one of claims 1, 3, and 5 to 14; or
> the processing circuit is configured to perform the method according to any one of claims 2, 4 to 13, and 15; or
> the processing circuit is configured to perform the method according to any one of claims 16, 18, and 20 to 31; or
> the processing circuit is configured to perform the method according to any one of claims 17, 19 to 30, and 32.

37. A computer-readable storage medium, wherein the computer-readable storage medium stores a computer program or instructions, and when the computer program or the instructions are run on a computer,

> the method according to any one of claims 1, 3, and 5 to 14 is performed; or
> the method according to any one of claims 2, 4 to 13, and 15 is performed; or
> the method according to any one of claims 16, 18, and 20 to 31 is performed; or
> the method according to any one of claims 17, 19 to 30, and 32 is performed.

38. A computer program product, comprising instructions, wherein when the instructions are run on a computer,

> the method according to any one of claims 1, 3, and 5 to 14 is performed; or
> the method according to any one of claims 2, 4 to 13, and 15 is performed; or
> the method according to any one of claims 16, 18, and 20 to 31 is performed; or
> the method according to any one of claims 17, 19 to 30, and 32 is performed.

FIG. 1

FIG. 2

FIG. 3

FIG. 4

12 guard subcarriers

11 guard subcarriers

5DC

23DC

5DC

| 26-tone RU | 26 26 26 26 26 26 26 26 26 | 26 26 26 26 26 26 26 26 26 | 26 26 26 26 26 26 26 26 | 26 26 26 26 26 26 26 26 |
| 52-tone RU | 1 52 2 52 1 1 52 2 52 1 | 1 52 2 52 1 1 52 2 52 1 | 1 52 2 52 1 1 52 2 52 1 | 1 52 2 52 1 1 52 2 52 1 |
| 106-tone RU | 106 106 | 106 106 | 106 106 | 106 106 |
| 242-tone RU | 242 | 242 | 242 | 242 |
| 484-tone RU | 484L | | 484R | |
| 996-tone RU | 996+5DC | | | |

FIG. 5

| L-STF (legacy short training field) | L-LTF (legacy long training field) | L-SIG (legacy signal field) | VHT-SIG-A (VHT signal field A) | VHT-STF (VHT short training field) | VHT-LTF (VHT long training field) | VHT-SIG-B (VHT signal field B) | Data (data field) |
|---|---|---|---|---|---|---|---|

(a)

| L-STF (legacy short training field) | L-LTF (legacy long training field) | L-SIG (legacy signal field) | RL-SIG (repeated legacy signal field) | HE-SIG-A (HE signal field A) | HE-STF (HE short training field) | HE-LTF (HE long training field) | Data (data field) | PE (packet extension field) |
|---|---|---|---|---|---|---|---|---|

(b)

| L-STF (legacy short training field) | L-LTF (legacy long training field) | L-SIG (legacy signal field) | RL-SIG (repeated legacy signal field) | U-SIG (universal signal field) | EHT-STF (EHT short training field) | EHT-LTF (EHT long training field) | Data (data field) | PE (packet extension field) |
|---|---|---|---|---|---|---|---|---|

(c)

FIG. 6

First device

Second device

S701: Generate a first part of a
first PPDU, where the first part of
the first PPDU is used to carry
data information

S702: The first part of the first PPDU

FIG. 7

First part of a second PPDU, 40 MHz, 312.5 kHz

-64    -63    -62    -61    -60    ...    61    62    63

Compression

First part of a first PPDU, 20 MHz,
156.25 kHz

-64  -63  -62  -61  -60  ...  61  62  63

FIG. 8

FIG. 9

FIG. 10

First device

Second device

S1101: Generate a first part of a
first PPDU, where the first part of
the first PPDU is used to carry
data information

S1102: The first part of the first PPDU

FIG. 11

20 MHz, 78.125 kHz, 52-tone RU 1

−121 −120 −119 −118 −117 ... 68 69 70

Extension

20 MHz, 312.5 kHz, 52-tone RU*

−26 −25 −24 −23 −22 ... 24 25 26

FIG. 12

20 MHz, 78.125 kHz, 106-tone RU 1

−122 −121 −120 −119 −118 ... 15 16 17

Extension

20 MHz, 156.25 kHz, 106-tone RU*

−53 −52 −51 −50 −49 ... 51 52 53

FIG. 13

| 6 | 13 | 11 | 13 | 5 |
|---|----|----|----|---|
|   | 1  | 1  | 1  | 1 |

(a)

| 5 | 13 | 11 | 13 | 6 |
|---|----|----|----|---|
|   | 1  | 1  | 1  | 1 |

(b)

FIG. 14

| 6 | 25 | 41 | 25 | 5 |
|---|---|---|---|---|
| | 1 | | 1 | | 1 | | 1 | |

(a)

| 5 | 25 | 41 | 25 | 6 |
|---|---|---|---|---|
| | 1 | | 1 | | 1 | | 1 | |

(b)

## FIG. 15

| U-SIG |
|-------|
| U-SIG |
| U-SIG |
| U-SIG |

(a)

| U-SIG 1 |
|---------|
| U-SIG 1 |
| U-SIG 2 |
| U-SIG 2 |

(b)

| U-SIG 1 |
|---------|
| U-SIG 2 |
| U-SIG 1 |
| U-SIG 2 |

(c)

## FIG. 16

High
frequency

160 MHz

320 MHz

160 MHz

| Preamble 3 | Data 3 |
| Preamble 2 | Data 2 |
| Preamble 1 | Data 1 |

Low
frequency

Indication
signaling

FIG. 17

Transceiver unit 1810

Processing unit 1820

FIG. 18

Processor 1910

Transceiver 1930

Memory 1920

FIG. 19

Logic circuit 2010

Input/Output interface 2020

FIG. 20

## INTERNATIONAL SEARCH REPORT

| International application No. |
|---|
| **PCT/CN2024/078044** |

### A. CLASSIFICATION OF SUBJECT MATTER

H04L 27/26(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, DWPI, ENTXT, 3GPP: 低频, PPDU, 物理层协议数据单元, 上时钟, 放大, 子载波, 索引, 间隔, 前导码信令, 固定, 不变, 相同, 倍数, 非常高吞吐量, VHT, 高效, HE, 超高可靠性, UHR, 超高吞吐量, EHT; Low frequency, physical layer protocol data unit, upper clock, amplification, subcarrier, index, spacing, preamble signaling, fixed, unchanged, same, multiple, physical protocol data unit, very high throughput, high efficency, ultra-high realibilty, extreme high throughput

### C. DOCUMENTS CONSIDERED TO BE RELEVANT

| Category* | Citation of document, with indication, where appropriate, of the relevant passages | Relevant to claim No. |
|---|---|---|
| X | CN 115997372 A (LG ELECTRONICS INC.) 21 April 2023 (2023-04-21) description, paragraph [0047] to paragraph [0223] | 1-38 |
| A | CN 110460415 A (HUAWEI TECHNOLOGIES CO., LTD.) 15 November 2019 (2019-11-15) entire document | 1-38 |
| A | KR 20190004282 A (QUALCOMM INC.) 11 January 2019 (2019-01-11) entire document | 1-38 |
| A | US 2023179458 A1 (LG ELECTRONICS INC.) 08 June 2023 (2023-06-08) entire document | 1-38 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 May 2024** | **22 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/078044** |

| Patent document cited in search report | | | Publication date (day/month/year) | Patent family member(s) | | | Publication date (day/month/year) |
| --- | --- | --- | --- | --- | --- | --- | --- |
| CN | 115997372 | A | 21 April 2023 | US | 2023231670 | A1 | 20 July 2023 |
| | | | | WO | 2022005193 | A1 | 06 January 2022 |
| | | | | US | 2023344572 | A1 | 26 October 2023 |
| | | | | US | 11876739 | B2 | 16 January 2024 |
| | | | | KR | 20230008166 | A | 13 January 2023 |
| CN | 110460415 | A | 15 November 2019 | US | 2021050962 | A1 | 18 February 2021 |
| | | | | US | 11431447 | B2 | 30 August 2022 |
| | | | | WO | 2019214212 | A1 | 14 November 2019 |
| KR | 20190004282 | A | 11 January 2019 | KR | 102581327 | B1 | 20 September 2023 |
| | | | | JP | 2019515566 | A | 06 June 2019 |
| | | | | JP | 7000345 | B2 | 10 February 2022 |
| | | | | US | 2017325202 | A1 | 09 November 2017 |
| | | | | US | 10375683 | B2 | 06 August 2019 |
| | | | | US | 2017325178 | A1 | 09 November 2017 |
| | | | | US | 10764877 | B2 | 01 September 2020 |
| | | | | ES | 2963223 | T3 | 26 March 2024 |
| | | | | EP | 3453217 | A2 | 13 March 2019 |
| | | | | EP | 3453217 | B1 | 25 October 2023 |
| | | | | CA | 3218385 | A1 | 09 November 2017 |
| | | | | EP | 4096337 | A1 | 30 November 2022 |
| | | | | BR | 112018072786 | A2 | 12 March 2019 |
| | | | | TW | 201743654 | A | 16 December 2017 |
| | | | | CA | 3019844 | A1 | 09 November 2017 |
| | | | | US | 2019166590 | A1 | 30 May 2019 |
| | | | | US | 10470174 | B2 | 05 November 2019 |
| US | 2023179458 | A1 | 08 June 2023 | WO | 2021235735 | A1 | 25 November 2021 |

Form PCT/ISA/210 (patent family annex) (July 2022)

**EP 4 753 219 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311051673